# EUROPEAN PATENT APPLICATION

(11) **EP 4 607 167 A1**
(43) Date of publication of application: **27.08.2025**
(21) Application number: 24159632.9
(22) Date of filing: 26.02.2024
(51) Int. Cl.: G01L 1/14

(54) **A FORCE SENSING DEVICE AND A METHOD FOR MANUFACTURING A FORCE SENSING DEVICE**

(71) Applicant: Imec VZW, 3001 Leuven (BE); Katholieke Universiteit Leuven KU Leuven Research & Development, 3000 Leuven (BE)
(72) Inventor: MASSIMINO, Gianluca, 3001 Leuven (BE); PODKOVSKIY, Alexey, 3800 Sint-Truiden (BE); ROCHUS, Veronique, 4053 Embourg (BE)
(74) Representative: AWA Sweden AB

(57) **Abstract**

A force sensing device (100) comprises: a flexible substrate (102); a sensor unit (112) arranged thereon comprising: at least one first electrode (114a-d) in a first layer (116); at least one second electrode (120) in a second layer (122); wherein a plurality of first electrodes (114a-d) and/or second electrodes is provided; an intermediate structure (130) between the first and second electrodes for changing characteristics upon a force being received; trench(es) (140) in the second layer (122) partially surrounding the second electrode(s) (120), wherein bridging structure(s) (142) provides an anchoring position defining a fixed relation between the first and second layers (116; 122); a rigid projecting structure (150) projecting from the second layer (122) and connected to the second electrode(s) (120), wherein the rigid projecting structure (150) is embedded in an elastic material (152) for allowing the rigid projecting structure (150) to be tilted in relation to the first layer (116).

## Description

### Technical field

The present description relates to a force sensing device. In particular, the present description relates to a force sensing device that is able to sense forces in multiple directions. The present description also relates to a method for manufacturing a force sensing device.

### Background

There is an increasing use of flexible electronics, wherein electronic circuitry is provided on a flexible support. In many applications, it is desired to include a force sensor in flexible electronics. For instance, force sensors may be used for providing a touch feeling in soft robots, such as in service robots, medical robots, and wearable robots, for instance prostheses and exoskeletons.

The use of force sensors in combination with flexible electronics may allow achieving, for instance, dexterous manipulation of objects in industrial production, intelligent microgripper for robotic surgery, wearing comfort evaluation of wearable robots, or monitoring of health activity, such as blood pressure, wrist pulse, heart beating and breathing rates, or muscular tremor.

Thus, there is a need for a force sensor that may be arranged on a flexible support without preventing flexing of the support. Further, the force sensor should desirably be able to sense both shear forces, acting along a surface, and a pressure, i.e., a force acting perpendicular to the surface.

In addition, there is a need for a manufacturing method of force sensors that may facilitate high-volume manufacturing.

### Summary

An objective of the present description is to provide a force sensor that may be arranged on a flexible substrate, and which may accurately sense forces in multiple dimensions. Another objective of the present description is to provide a force sensor that facilitates high-volume manufacturing.

These and other objectives are at least partly met by the invention as defined in the independent claims. Preferred embodiments are set out in the dependent claims.

According to a first aspect, there is provided a force sensing device comprising: a flexible substrate; at least one sensor unit arranged on the flexible substrate, wherein the sensor unit comprises: at least one first electrode arranged in a first layer on a first surface of the flexible substrate; at least one second electrode arranged in a second layer on the first layer such that the first layer is closer to the flexible substrate than the second layer; wherein the at least one first electrode comprises a plurality of first electrodes, wherein each of the first electrodes defines a separate area in the first layer, and/or wherein the at least one second electrode comprises a plurality of second electrodes, wherein each of the second electrodes defines a separate area in the second layer; an intermediate structure arranged between the first layer and the second layer, wherein the intermediate structure is configured to change characteristics of the force sensing device between the at least one first electrode and the at least one second electrode upon a force being received by the sensor unit; at least one trench in the second layer, wherein the at least one trench is configured to partially surround the at least one second electrode, wherein at least one bridging structure is configured to connect portions of the second layer on opposite sides of the at least one trench, wherein each of the at least one bridging structure is configured to provide an anchoring position for providing a fixed relation between the first layer and the second layer within the sensor unit in the anchoring position; a rigid projecting structure arranged on the second layer projecting therefrom and connected to the at least one second electrode, wherein the rigid projecting structure is embedded in an elastic material for allowing the rigid projecting structure to be tilted in relation to the first layer upon receiving a force.

The force sensing device is able to distinguish between pressure acting in a perpendicular direction to the second layer and shear forces acting in a direction parallel to the second layer. A pressure implies that an effect will be uniform over an entire surface of the at least one first electrode and the at least one second electrode. However, shear forces provide different effects on different parts of the at least one first electrode and the at least one second electrode. Thanks to having a plurality of first electrodes and/or a plurality of second electrodes, differential detection may be used for detecting shear forces. In addition, detecting equal changes related to the plurality of first electrodes and/or the plurality of second electrodes, may be used for detecting pressure.

The at least one trench in the second layer ensures that a force received by the force sensing unit may be transferred to changed characteristics between the at least one first electrode and the at least one second electrode. For instance, free ends of the second layer may move in relation to the first layer, such that the second layer may be tilted in relation to the first layer. This may allow sensing of the force based on characteristics between the at least one first electrode and the at least one second electrode being changed.

In addition, the at least one bridging structure ensures that a relation between the at least one first electrode and the at least one second electrode is resumed upon release of the force. This implies that drift of the force sensing device is avoided.

The at least one bridging structure also provides an anchoring effect of anchoring the second layer to the first layer. This implies that lateral movement of the at least one second electrode relative to the at least one first electrode may be avoided. As a result, pressure and shear forces may be fully decoupled and may be measured independently.

The rigid projecting structure is configured to transfer a force acting on the rigid projecting structure of the sensor unit to an effect on the second layer and/or the intermediate structure. The rigid projecting structure may be tilted in dependence of shear forces acting on the sensor unit. The rigid projecting structure is further connected to the second layer such that tilting of the rigid projecting structure affects the at least one second electrode.

The elastic material provides a cushioning of the rigid projecting structure so as to reduce wear and tear of the sensor unit and reduce stress on the sensor unit.

The sensor unit is designed so as to allow the sensor unit to be formed, e.g., by micromachining. This implies that the sensor unit is designed so as to facilitate forming of the sensor unit in a small size, such as having dimensions smaller than 1 mm along the flexible substrate.

The sensor unit may be relatively rigid compared to the flexible substrate, at least based on the sensor unit including the rigid projecting structure. However, the sensor unit may have a small size. This implies that the sensor unit may not significantly affect a flexibility of the force sensing device. Thus, the force sensing device may be flexible so as to, for instance, allow the force sensing device to conform to a shape of a body, if the force sensing device is part of a wearable device. In addition, the force sensing device may comprise a plurality of sensor units while the force sensing device may still have an overall flexibility. For instance, the flexible substrate may flex in locations between adjacent sensor units.

The flexible substrate is capable of bending without breaking. However, the flexible substrate may not be stretchable.

The flexible substrate may have a large extension along a first direction and may have a relatively small thickness in a direction perpendicular to the first direction. The flexible substrate may have opposite surfaces defining the thickness of the flexible substrate, such that the surfaces have a large size compared to the thickness of the substrate. The first surface of the flexible substrate forms one of the opposite surfaces.

The flexible substrate may be substantially flat unless the flexible substrate is affected so as to cause the substrate to flex and thereby change shape.

As used herein, the term "on" should not be construed as a part being necessarily directly on another part. Thus, for instance, the first layer being arranged "on" the first surface of the flexible substrate does not necessarily mean that the first layer is arranged directly on the first surface of the flexible substrate. Rather, there may be intermediate parts or layers in-between. In addition, the parts of the force sensing device are presented in relation to each other from a point of view of the flexible substrate being oriented such that the first surface is on or above a second surface of the flexible substrate, the second surface being opposite to the first surface. Thus, the term "*on*" should be construed as defining the parts in relation to each other and should not be construed as necessarily defining the force sensing device in relation to an external coordinate system, such as in relation to Earth.

The first layer may extend along the flexible substrate. The first layer may extend over the entire first surface of the flexible substrate or may extend over only a part of the first surface. For instance, the first layer may only be formed within an area corresponding to the sensor unit, or spacings in the first layer may be formed between adjacent sensor units.

The at least one first electrode is formed in the first layer. Each of the at least one first electrodes may be substantially planar and may extend along the extension of the first layer. The at least one first electrode may be arranged in an area of the first layer. If a plurality of first electrodes is provided, defining separate areas, the separate areas are formed in separate parts of the extension of the first layer.

The second layer may also extend along the flexible substrate. The second layer may extend over the entire first surface of the flexible substrate or may extend over only a part of the first surface. For instance, the second layer may only be formed within an area corresponding to the sensor unit, or spacings in the second layer may be formed between adjacent sensor units.

The second layer may have a common size with the first layer such that the extension of the second layer is equal to the extension of the first layer. The second layer may extend in parallel with the first layer.

The at least one second electrode is formed in the second layer. Each of the at least one second electrodes may be substantially planar and may extend along the extension of the second layer. The at least one second electrode may be arranged in an area of the second layer. If a plurality of second electrodes is provided, defining separate areas, the separate areas are formed in separate parts of the extension of the second layer.

The intermediate structure is arranged between the first layer and the second layer. The intermediate structure is configured to define a relation between the at least one first electrode and the at least one second electrode. For instance, the intermediate structure may comprise an intermediate layer providing a material between the at least one first electrode and the at least one second electrode.

According to an alternative, the intermediate structure may be provided such that a spacing or cavity is formed between the at least one first electrode and the at least one second electrode. The spacing or cavity may be filled by a gas, such as air, but alternatively, a vacuum may be provided between the at least one first electrode and the at least one second electrode. The intermediate structure may in such case provide a spacer structure for separating the first layer from the second layer, wherein the spacer structure may be laterally displaced from areas corresponding to the at least one first electrode and the at least one second electrode.

The first layer and the second layer may be formed from the same material. Also, a material between the first layer and the second layer, at least in a portion outside an area corresponding to the electrodes may be formed from the same material as the first and second layers. This implies that there may not necessarily be a distinct transition between the first layer, the intermediate structure and the second layer. Nevertheless, the first layer and the second layer are at least distinct in that the layers are formed at different heights in relation to the first surface of the flexible substrate and that the first electrode(s) are formed in the first layer and the second electrode(s) are formed in the second layer.

The material of each of the first layer and the second layer may be an insulating material. The at least one first electrode and the at least one second electrode may each be formed by an electrically conducting material, such as a metal. The same material may be used for the at least one first electrode and the at least one second electrode.

The sensor unit may form a plurality of force sensitive components. The force sensitive components are defined by the at least one first electrodes being spaced apart from the at least one second electrodes. If there is a plurality of first electrodes and a plurality of second electrodes, each force sensitive component may be defined by a unique first electrode and a unique second electrode, spaced apart from the first electrode. However, the force sensitive components may share a common electrode. Thus, the sensor unit may comprise a plurality of first electrodes and a single second electrode, and each of the force sensitive components may be defined by a unique first electrode spaced apart from the common second electrode. Alternatively, the sensor unit may comprise a plurality of second electrodes and a single first electrode, and each of the force sensitive components may be defined by a unique second electrode spaced apart from the common first electrode.

The force sensitive components may be configured to perform measurements according to any of a plurality of alternatives. The force sensitive components may for instance be configured to perform a measurement based on an electrical characteristic, such as resistance, capacitance, or impedance.

The intermediate structure may be configured to change characteristics of the force sensing device based on a distance between the at least one first electrode and the at least one second electrode being changed. Such change of distance may translate to a change in an electrical characteristic of the force sensitive component. The distance between the at least one first electrode and the at least one second electrode may be changed based on a size of a spacing that is for instance filled by a gas being changed between the at least one first electrode and at least one second electrode. Alternatively, the distance between the at least one first electrode and the at least one second electrode may be changed based on a thickness of a material between the at least one first electrode and the at least one second electrode being changed (for instance, compressed).

The force sensitive components may be configured to change characteristics without necessarily the distance between the at least one first electrode and the at least one second electrode being changed. For instance, the intermediate structure may include a material that changes characteristic in dependence of an applied force on the material. The material of the intermediate structure may change an electric characteristic, such as a resistance, capacitance, or impedance, based on a force applied on the material. This implies that the electric characteristic between a first electrode and a second electrode may be changed allowing the force sensitive component to detect a force being received by the sensor unit.

The intermediate structure may comprise a conductive polymer between the at least one first electrode and the at least one second electrode, wherein the conductive polymer may be configured to change an electrical characteristic based on a force being received by the sensor unit. The intermediate structure may alternatively comprise a material between the at least one first electrode and the at least one second electrode, wherein the material may be compressed or deformed based on the force being received by the sensor unit. The intermediate structure may as yet another alternative comprise a piezo-electric material between the at least one first electrode and the at least one second electrode, wherein the piezo-electric material may change an electric characteristic based on a force being received by the sensor unit causing the piezo-electric material to deform. The intermediate structure may according to another alternative comprise a cavity between the at least one first electrode and the at least one second electrode allowing a change in distance between the at least one first electrode and the at least one second electrode to be provided based on the force being received by the sensor unit.

It should be realized that the sensor unit may provide different changes of characteristics at different parts of the sensor unit based on a shear force being received by the sensor unit. This implies that different force sensitive components may detect different changes so as to allow the shear force to be detected. For instance, the distance between the first electrode and the second electrode may be different in different force sensitive components. The distance may be decreased from a nominal distance in one force sensitive component and may be increased from the nominal distance in another force sensitive component.

The at least one trench may form a cut through a homogeneity of a material of the second layer. The at least one trench may extend through the entire thickness of the second layer. The at least one trench may also extend through at least part of the thickness of the intermediate structure. The at least one trench may form a path in the second layer that at least partially surrounds a part of the second layer in which the at least one second electrode of the sensor unit is arranged. Thus, the at least one trench may define a part of the second layer that is used for detecting the force being received by the sensor unit.

The at least one trench may form a spacing in the second layer and may be filled by a gas, such as air. However, the at least one trench may be filled by another material, such as an elastic material, e.g., the elastic material in which the rigid projecting structure is embedded.

The part of the second layer surrounded by the at least one trench may have free ends that may be movable in relation to the spacing in the second layer or by causing deformation of the elastic material in the at least one trench.

The at least one trench may define a part of the second layer including the at least one second electrode that is used for detecting the force being received by the sensor unit. The at least one trench may define the part by the arrangement of the at least one trench to partially surround the at least one second electrode.

The path of the at least one trench in the second layer may be interrupted by the at least one bridging structure. Thus, the at least one trench does not form a closed path in the second layer. Each bridging structure may form a continuous arrangement of the material of the second layer. Thus, the bridging structure provides an anchoring position for the part of the second layer including the at least one second electrode.

The sensor unit may comprise only one trench defining a path that partially surrounds the part of the second layer including the at least one second electrode. The trench may form an almost closed path with one bridging structure being arranged such that the path of the trench is not fully closed. However, the sensor unit may comprise a plurality of bridging structures which may form interruptions of paths of more than one trench, such that a plurality of trenches and a plurality of bridging structures may be provided. This implies that the part of the second layer including the at least one second electrode may have a plurality of anchoring positions.

According to an embodiment, the at least one trench does not extend into a layer of the intermediate structure. Rather, the at least one trench may be shallow and only extend through the second layer or part of a thickness of the second layer. In such case, the at least one trench may form a closed path in the second layer surrounding the at least one second electrode. The bridging structure may be provided below the at least one trench. For instance, a dielectric layer may be arranged below the at least one second electrode and may extend to connect portions on opposite sides of the at least one trench by a dielectric layer extending uninterrupted below the at least one trench. The bridging structure may thus provide anchoring extending along a continuous path below the at least one trench. This arrangement may imply that lateral movement of the at least one second electrode relative to the at least one first electrode may be avoided. As a result, pressure and shear forces may be fully decoupled and may be measured independently.

The at least one trench may not be configured to form a closed path completely surrounding the at least one second electrode. Nevertheless, the at least one trench is configured such that a quadrilateral shape may be defined in the part of the second layer partially surrounded by the at least one trench, wherein the at least one trench is arranged laterally in the second layer in relation to each side of the quadrilateral shape. In addition, a size of the bridging structure(s) in the second layer is small in relation to a lateral extension in the second layer of the at least one trench.

The rigid projecting structure is arranged on the part of the second layer which is defined by the at least one trench. The rigid projecting structure projects from the second layer such that the second layer is between the flexible substrate and the rigid projecting structure.

The projecting structure is referred to as being rigid in that the rigid projecting structure is at least more rigid than the elastic material in which the projecting structure is embedded. The projecting structure may be configured to receive a force applied to the force sensing unit and transfer the force such that the force may be detected. If a shear force is received by the sensor unit, the rigid projecting structure may be tilted in relation to the first layer.

The projecting structure being embedded in the elastic material implies that the projecting structure is surrounded at all sides by the elastic material, except for the interface of the projecting structure to a layer from which the rigid projecting structure projects. The projecting structure may possibly also extend a small distance into the layer or structure from which it projects.

According to an embodiment, the rigid projecting structure is arranged centrally on the second layer in the sensor unit and a cross-section of the rigid projecting structure is smaller than a size of the second layer within an area inside the at least one trench.

The at least one trench may define an area of the second layer. The area may be defined by the path of the at least one trench which partially surrounds the area, wherein a straight line may connect different parts of the path across a bridging structure.

The rigid projecting structure may fit within the part of the second layer that is defined by the at least one trench. Thus, the rigid projecting structure may be configured to transfer a force being received by the sensor unit to the part of the second layer being inside the at least one trench.

Thanks to the rigid projecting structure being centrally arranged on the second layer in the sensor unit, the sensor unit may be symmetrically arranged to detect the force received by the sensor unit. This may facilitate detecting forces in two perpendicular lateral directions along the second layer with equal accuracy.

However, it should be realized that the rigid projecting structure needs not necessarily be centrally arranged on the second layer.

According to an embodiment, a size of a cross-section of the rigid projecting structure is smaller than a height of the rigid projecting structure.

The cross-section of the rigid projecting structure may be identical along the height of the rigid projecting structure. The cross-section may be defined in a plane parallel to the second layer. The size of the cross-section may be defined as a dimension of the rigid projecting structure in the cross-section, such as a diameter if the rigid projecting structure has a circular shape or a size of a side if the rigid projecting structure has a square shape.

The height of the rigid projecting structure may be defined as a size of the rigid projecting structure in a direction perpendicular to the second layer.

A design of the rigid projecting structure may affect sensitivity of the sensor unit to shear forces. The rigid projecting structure having a smaller size of the cross-section than a height may imply that the sensor unit has a high sensitivity to shear forces. However, it should be realized that the rigid projecting structure may alternatively have a larger size of the cross-section than its height.

The rigid projecting structure may be substantially more rigid than the elastic material. This implies that the rigid projecting structure may be configured to sense shear stress of a force being received by the sensor unit into the elastic material.

The rigid projecting structure may provide an interlock from the second layer in which the at least one second electrode is provided into the elastic material.

According to an embodiment, Young's modulus of a material of the rigid projecting structure is at least 10 times larger than Young's modulus of the elastic material.

This may be suitable to enable the sensor unit to accurately sense shear forces.

The elastic material reduces the stress applied on the sensor unit and protects the sensor unit. In particular, the elastic material may reduce wear and stress-induced fractures and raptures of the sensor unit. The elastic behavior of the elastic material may be tuned to achieve different levels of rigidity that implies different levels of protection for the sensor unit.

Having a relatively rigid elastic material results in a more cushioning behavior (compared to a less rigid elastic material) that transmits less stress to the sensor unit that is more protected against stress-induced fractures and raptures and wear. Moreover, also the sensitivity can be tuned by changing the elastic stiffness of the elastic material.

The stiffness of the elastic material may be tuned for instance by changing proportions of curing agents in a solution forming the elastic material.

According to an embodiment, the Young's modulus of the material of the rigid projecting structure is in the order of GPa or higher, such as larger than 1 GPa. Further, the Young's modulus of the elastic material may be in the order of 10-100 MPa or smaller, such as smaller than 100 MPa. However, it should be realized that the rigid projecting structure and/or the elastic material may have different stiffness characteristics.

According to an embodiment, the at least one trench may define an outer circumference of a shape of the second layer. The at least one trench does not form a closed shape in the second layer. Rather, at least one bridging structure is provided to connect portions of the second layer on opposite sides of the at least one trench. However, each bridging structure may be relatively small and the shape of the second layer defined by the at least one trench may be closed by an imaginary line across the bridging structure, wherein the imaginary line follows extensions of the at least one trench on opposite sides of the bridging structure.

The shape of the second layer defined by the at least one trench may be symmetrical. This may facilitate detection of shear forces acting in a direction parallel to an extension of the second layer.

In particular, the shape of the second layer may be symmetrical around each of two perpendicular symmetry lines in the second layer. This may facilitate detecting shear forces in two dimensions, so as to divide a shear force being received by the sensor unit into two components along perpendicular lines in a plane of the second layer.

According to an embodiment, the at least one trench defines a quadrilateral shape of the second layer being partially surrounded by the at least one trench.

This may be a suitable shape for detecting shear forces in two dimensions.

According to an embodiment, the at least one trench comprises four trenches and the at least one bridging structure comprises four bridging structures, wherein the four bridging structures are arranged at respective sides of the quadrilateral shape of the second layer.

This facilitates detecting shear forces in two dimensions. Thus, the sensor device may be configured for three-dimensional force detection since the sensor unit is further configured to distinguish shear forces from pressure.

The four bridging structures may be arranged such that the bridging structures are arranged on two perpendicular symmetry lines of the shape of the second layer defined by the at least one trench. Thus, a structure of the second layer is fixed in relation to symmetry lines of the shape of the structure. This implies that forces sensed by force sensitive components may be easily analyzed for determining components of the force in three dimensions.

It should be realized that the sensor unit need not necessarily comprise four bridging structures. If a single bridging structure is used, the sensor unit may be able to distinguish shear forces from pressure but may not necessarily be able to divide shear forces into two components. However, this may be sufficient in some applications.

Having more than one bridging structure may ensure that shear forces may be divided into two perpendicular components for three-dimensional force detection. The sensor unit need not necessarily comprise four bridging structures for providing three-dimensional force detection, even though four bridging structures may provide accurate and robust detection of forces in three dimensions. The sensor unit may for instance comprise two bridging structures, wherein each of the bridging structures is arranged on a respective symmetry line of the shape of the structure of the second layer.

According to an embodiment, the at least one bridging structure is formed by a monolithically integrated structure extending at least from the first layer to the second layer.

This implies that the bridging structure(s) firmly connect the second layer to the first layer. Hence, the bridging structures define a spatial relation between the second layer and the first layer. The bridging structures imply that pressure and shear forces may be fully decoupled and may be measured independently. Further, the bridging structure(s) may ensure that a relation between the at least one first electrode and the at least one second electrode is resumed upon release of the force. This implies that drift of the force sensing device is avoided.

According to an embodiment, the intermediate structure comprises a force sensitive material which is configured to change electric characteristics based on a force being received on a surface of the force sensitive material.

This implies that a force received by the sensor unit may be converted to a change in electric characteristics of the sensor unit, which may facilitate sensing of the force.

The force sensitive material may be formed as a layer between the first and second layers. The force sensitive material may further be arranged between the at least one first electrode and the at least one second electrode.

The force sensitive material may form a coherent structure between the at least one first electrode and the at least one second electrode. Alternatively, the force sensitive material may comprise separate parts arranged in a plurality of separate areas in the layer between the first and second layers, wherein each separate part is associated with a respective force sensitive component.

The surface of the force sensitive material may be a surface facing the second layer. A force being received by the sensor unit may be transferred to the force being received on the surface of the force sensitive material. The force sensitive material may be deformed based on the force being received. However, the force sensitive material may alternatively change electric characteristics without the force sensitive material necessarily being deformed.

The at least one trench may extend into the layer or at least to the layer in which the force sensitive material is arranged. This implies that the force sensitive material is not confined or constrained in a closed space between the first and second layers. Rather, the force sensitive material may deform to extend laterally into the at least one trench upon a force being received on the surface of the force sensitive material. Thanks to the force sensitive material being allowed to extend into the at least one trench upon receiving a force, a plateau in a response curve of the sensor unit may be avoided, which may otherwise affect sensitivity of the sensor unit above a threshold level of the received force.

The use of a force sensitive material between the first and second layers also implies that the second layer is not suspended above the first layer with a cavity being arranged between the first and second layers. Hence, fabrication-induced residual stresses in the second layer being suspended above the first layer may be avoided. If present, such residual stresses may cause a variation in a distance between the at least one first electrode and the at least one second electrode so as to cause a variation in a sensed characteristic of the sensor unit from a designed characteristic.

In particular, an upward deflection of the second layer in which the at least one second electrode is arranged may result in a lower capacitance and a lower sensitivity than designed. Further, a downward deflection of the second layer in a thin gap (small distance between first and second layers) often leads to stiction problems where the second layer is stuck on a layer below, such as the first layer, without any possibility to detach and sense the applied pressure and shear forces.

These problems may be avoided by having a material arranged between the first and second layers.

According to an embodiment, the intermediate structure comprises spacer structures for defining a cavity between the at least one first electrode and the at least one second electrode. The cavity may be filled by a gas.

In this case, the structure of the second layer including the at least one second electrode may be deflected upon a force being received by the sensor unit. This implies that a distance between the at least one first electrode and the at least one second electrode may be changed for detecting the force. This may be a simple manner of detecting the force.

Further, the force sensing device may be designed so as to at least mitigate initial deformation of the structure of the second layer due to residual stress from a fabrication process. In particular, the arrangement of the rigid projecting structure on the second layer may reduce the residual stress. The rigid projecting structure provides an additional rigidity to the sensor unit. In particular, residual stress in the second layer may redistribute and attenuate in the rigid projecting structure such that a portion of the second layer suspended over the first layer may be provided with a planar or almost planar configuration. This may ensure that problems of initial deformation of the second layer due to residual stress and a change in the characteristics of the sensor unit from designed characteristics are avoided.

It should be realized that the cavity may be filled by a gas, such as air. However, a vacuum may alternatively be arranged in the cavity. In such case, the sensor unit may be coated by the elastic material, wherein coating of the sensor unit is performed in a vacuum.

According to an embodiment, the at least one first electrode comprises the plurality of first electrodes and the plurality of first electrodes are symmetrically arranged around a central point on the first layer in the sensor unit.

The plurality of first electrodes may be part of a plurality of force sensitive components. Thus, each force sensitive component may comprise one first electrode which is unique to the force sensitive component. This implies that a location of the first electrode defines a location within the sensor unit at which the force sensitive component senses a force. Hence, force sensitive components may be provided symmetrically arranged around a central point on the first layer and around a central symmetry axis extending through the first and second layers in the sensor unit.

When the sensor unit receives a shear force, the force sensitive components on different sides of the symmetry axis of the sensor unit will provide different output such that the shear force may be detected. Thanks to the symmetrical arrangement of the first electrodes, force sensitive components on opposite sides of the symmetry axis may detect similar effects with opposing signs. For instance, if a distance between the first and second electrodes is decreased from a nominal position for a first force sensitive component, the distance between the first and second electrodes is correspondingly increased from the nominal position for a second force sensitive component that is symmetrically arranged in relation to the first force sensitive component.

The sensor unit may comprise a single second electrode, which is shared by the force sensitive components. Alternatively, the sensor unit may comprise a plurality of second electrodes. Then, each force sensitive component may also comprise one second electrode which is unique to the force sensitive component.

As yet another alternative, the sensor unit may comprise a single first electrode shared by the force sensitive components and instead comprise a plurality of second electrodes, wherein each force sensitive component may comprise one second electrode which is unique to the force sensitive component. Further, the plurality of second electrodes may be symmetrically arranged around a central point on the second layer in the sensor unit.

According to an embodiment, the plurality of first electrodes comprises four electrodes, wherein the four electrodes are symmetrically arranged in relation to each of two orthogonal symmetry axes in the first layer.

This facilitates detection of two perpendicular components of the shear force received by the sensor unit.

According to an embodiment, the at least one sensor unit comprises a plurality of sensor units arranged in an array.

Thus, the force sensing device may comprise a plurality of sensor units. The plurality of sensor units may be used for detecting forces over an area. Thus, the force sensing device may provide sensitivity of received forces in a large area. This may be useful in many applications, for instance for detection of interaction with a large surface.

The sensor units may form separate parts arranged on the flexible substrate. This implies that there may be a free space at lateral sides of each sensor unit between adjacent sensor units. The force sensing device may be flexible such that a shape of the force sensing device may be bent by the flexible substrate being bendable. During bending of the flexible substrate, deformation of the flexible substrate may be concentrated to locations between the sensor units. Thus, deformation may take place in regions associated with free space between sensor units, such that the sensor units are not affected and may behave as rigid islands on the flexible substrate.

In addition, a free space between the sensor units may allow the elastic material to deform without affecting the sensor unit. For instance, if a thermally induced deformation of the elastic material occurs, the elastic material may deform upwards (in a direction away from the substrate and the sensor unit below) and laterally (along a direction parallel to the substrate) without affecting the sensor unit.

The bending of the flexible substrate between the sensor units may ensure that bending deformation and applied stresses during deformation of the flexible substrate does not cause interference with detection of forces by the sensor units and cross-talk between the sensor units is avoided.

Each sensor unit may form a separate projection from the flexible substrate. For instance, each sensor unit may have a shape of a bulge on the flexible substrate. This may allow the force sensing device to provide a firm grip with a surface of an object in contact with the force sensing device so as to provide high sensitivity to shear forces and to avoid cross-talk interference between sensor units.

It should be realized that the sensor units may be identical so as to provide identical detection of forces over a surface of the force sensing device. However, the sensor units may have different configurations, which may correspond to different sensitivities of the sensor units. For instance, different sensor units may have different nominal distances between the at least one first electrode and the at least one second electrode and/or different sensor units may be formed from different materials having different properties, such as using different force sensitive materials between the at least one first electrode and the at least one second electrode.

According to an embodiment, a pitch of sensor units in the array is smaller than 1 mm, such as smaller than 500 µm, such as smaller than 200 µm.

This implies that the sensor units may be small and that the force sensing device may have a high spatial resolution. The sensor units may form small relatively rigid islands on the flexible substrate such that, even though the force sensing device may not change shape within the islands of the sensor units, the flexible substrate of the force sensing device still provides a high flexibility of the force sensing device. Thus, the force sensing device may be bendable to provide a highly adaptable shape of the force sensing device.

The pitch of the sensor units in the array may correspond to a distance from a center of a sensor unit to a center of a neighboring sensor unit.

The sensor units may be formed in a regular manner in the array, such that the distance between neighboring sensor units is equal throughout the array.

The array may be a one-dimensional array. However, the array may be a two-dimensional array, wherein the sensor units may be arranged in regular rows and columns. The force sensing device may have a first pitch of sensor units along rows of the array and a second pitch of sensor units along columns of the array. The first and second pitches may be equal.

According to an embodiment, the force sensing device further comprises at least one electric connection layer comprising read-out circuitry connected to the sensor units, wherein the at least one electric connection layer is arranged between the substrate and the sensor units.

The electric connection layer may for instance be formed as a stack of thin film layers, wherein thin film transistors may be formed for providing the read-out circuitry.

The electric connection layer may extend along a surface of the flexible substrate and be arranged between the flexible substrate and the sensor units. Thus, the electric connection layer may also be flexible to allow the force sensing device to be deformed.

The force sensing device may comprise an electric connection layer between a single sensor unit and the flexible substrate. Thus, the electric connection layer may be provided in the force sensing device even if the force sensing device does not comprise a plurality of sensor units.

According to an embodiment, the force sensing device further comprises a protective coating layer arranged between the substrate and the sensor units and configured to provide water and moisture protection of the sensor units.

The protective coating layer may be arranged between the substrate and the electric connection layer.

The protective coating layer may for instance be formed by aluminum oxide, silicon nitride, silicon oxide or polycrystalline silicon. Other materials may alternatively be used.

The flexible substrate may be formed from a polymer, which may have a hygroscopic behavior. In such case, the protective layer may be needed in order to provide water and moisture protection of the sensor units and also of the electric connection layer.

The protective coating layer may form a barrier for humidity and water that may otherwise cause corrosion, nanofiltration, swelling and loss of strength of the force sensing device.

The protective coating layer may extend along a surface of the flexible substrate and be arranged between the flexible substrate and the sensor units. Thus, the protective coating layer may also be flexible to allow the force sensing device to be deformed.

The force sensing device may comprise a protective coating layer between a single sensor unit and the flexible substrate. Thus, the protective coating layer may be provided in the force sensing device even if the force sensing device does not comprise a plurality of sensor units.

According to an embodiment, the force sensing device further comprises a coating layer arranged on the elastic material.

The coating layer may form a coating on the sensor unit. If the force sensing device comprises a plurality of sensor units, separate coatings may be provided on each sensor unit such that a free space may be provided between the sensor units.

The coating layer may be provided to provide an extra insulation of the sensor unit against gas and/or vapor and/or humidity and to provide protection against wear.

According to a second aspect, there is provided a method for manufacturing a force sensing device, said method comprising: forming a sensor unit on a flexible substrate, wherein forming of the sensor unit comprises: forming at least one first electrode in a first layer on a first surface of the flexible substrate; forming an intermediate structure above the first layer; forming at least one second electrode in a second layer on the intermediate structure, wherein the at least one first electrode comprises a plurality of first electrodes, wherein each of the first electrodes defines a separate area in the first layer, and/or wherein the at least one second electrode comprises a plurality of second electrodes, wherein each of the second electrodes defines a separate area in the second layer; and wherein the intermediate structure is configured to change characteristics of the force sensing device between the at least one first electrode and the at least one second electrode upon receiving a force; forming at least one trench in the second layer, wherein the at least one trench is configured to partially surround the at least one second electrode, wherein at least one bridging structure is configured to connect portions of the second layer on opposite sides of the at least one trench, wherein each of the at least one bridging structure is configured to provide an anchoring position for providing a fixed relation between the first layer and the second layer within the sensor unit in the anchoring position; forming a rigid projecting structure on the second layer projecting therefrom and connected to the at least one second electrode; forming an elastic material layer such that the rigid projecting structure is embedded in an elastic material for allowing the rigid projecting structure to be tilted in relation to the first layer upon receiving a force; wherein each act of forming is performed by microfabrication.

Effects and features of this second aspect are largely analogous to those described above in connection with the first aspect. Embodiments mentioned in relation to the second aspect are largely compatible with the first aspect.

The method enables manufacturing of a force sensing device that is flexible and able to provide decoupled detection of shear forces and pressure. In particular, the method may be used for manufacturing a force sensing device that may detect forces in three dimensions.

The method allows manufacturing to be performed using a process that may be based on standard micromachining, microfabrication, and frequently used materials. Thus, the manufacturing may be based on processes known from semiconductor industry. This implies that the manufacturing of the force sensing device may use well-known and tested manufacturing steps, facilitating inexpensive and accurate manufacturing of the force sensing device. The manufactured force sensing device may be based on reliable materials, providing stability and reliability of force sensing devices manufactured by the method. In addition, the manufacturing may be highly adaptable allowing flexible and versatile design of the force sensing device.

The method may use microfabrication processes for manufacturing of large area devices. For instance, flat panel display microfabrication processes may be used. Thus, the method may allow batch production of force sensing devices and also allow large-size force sensing devices to be produced.

The method may initially comprise forming the flexible substrate on a temporary carrier substrate. The temporary carrier substrate may be rigid forming a rigid structure during manufacturing, which may facilitate accurate forming of the force sensing device. The carrier substrate may be removed after the sensor unit has been formed on the flexible substrate so as to output a flexible force sensing device from the manufacturing method.

The method may also comprise forming a plurality of sensor units on the flexible substrate. The sensor units may be formed simultaneously on the flexible substrate, being arranged on different parts of the flexible substrate.

The forming of structures using microfabrication may involve various processing steps solely or in combination. Microfabrication is a process of fabricating miniature structures having features of small dimensions in micrometer scale or smaller. Microfabrication may involve forming structures on a substrate, which may be formed by a silicon wafer, glass, polymer, or other materials. The forming of structures may typically involve depositing a film, patterning the film, and removing portions of the film. This may be performed in several iterations for forming a layer on the substrate.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1 is a schematic view of a force sensing device according to an embodiment.
Fig. 2 is a cross-section of a sensor unit of the force sensing device, the cross-section being taken along line A-A in Fig. 1.
Fig. 3 is a top view of first electrodes arranged in a first layer of the sensor unit of Fig. 2.
Fig. 4 is a top view of trenches formed in a second layer of the sensor unit of Fig. 2.
Fig. 5 is a schematic view illustrating effect of a rigid projecting structure on a shape of the second layer when a cavity is provided between the first and second layers.
Fig. 6 is a schematic view illustrating deformation of sensing structures based on a pressure force and a shear force, respectively.
Fig. 7 is a view of graphs illustrating capacitance measurements of force sensitive components of the sensor unit for detecting pressure forces and shear forces, respectively.
Fig. 8 is a cross-section of two neighboring sensor units of the force sensing device.
Fig. 9 is a flow chart of a method according to an embodiment.
Fig. 10 is a cross-section of a sensor unit during manufacturing of the force sensing device.

### Detailed description

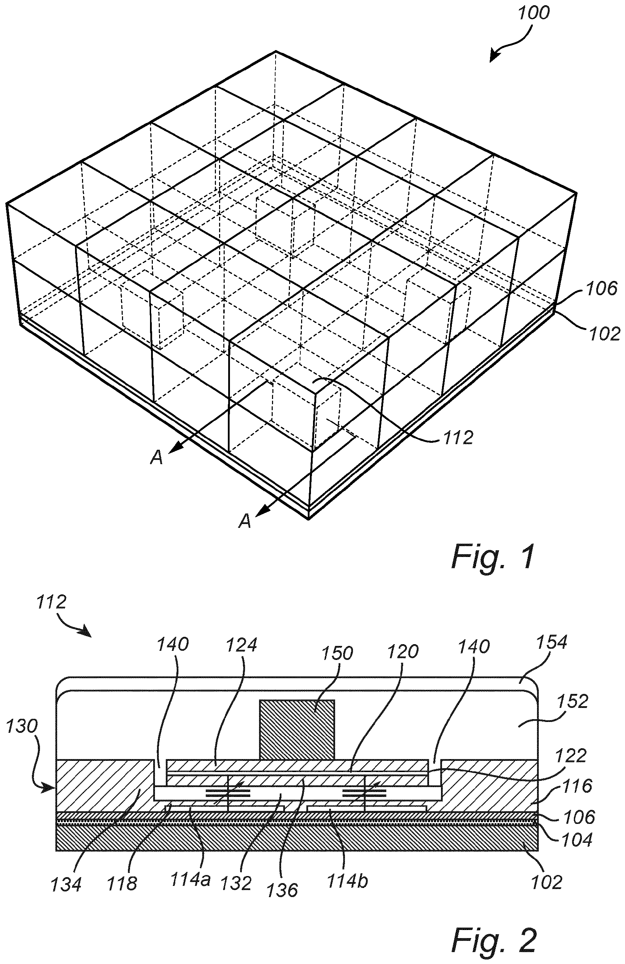

Referring now to Fig. 1, a force sensing device 100 will be described. The force sensing device 100 comprises a plurality of sensor units 112 arranged in an array. In the following, a single sensor unit 112 will mainly be discussed. It should be realized that the force sensing device 100 may only comprise a single sensor unit 112 or may comprise a plurality of sensor units 112 that are not necessarily regularly arranged in the force sensing device 100, such as being spread apart on a large surface.

The force sensing device comprises a flexible substrate 102. The flexible substrate 102 comprises a surface having a large size. The flexible substrate 102 may be relatively thin in a direction perpendicular to the surface and may have a large extension along the surface, that is a size of the substrate 102 along the surface may be much larger than a thickness of the substrate 102.

The substrate 102 may be nominally flat but may be flexible such that the substrate 102 may be deformed in that a shape of the surface of the substrate 102 is changed. Thus, the substrate 102 may for instance conform to a shape of a complex three-dimensional structure. The substrate 102 may be flexible in that the substrate 102 may be bent so as to change a shape of the surface of the substrate 102. However, the substrate 104 may be non-stretchable.

The flexible substrate 102 may be formed by a polymer, such as polyimide (PI), or by a flexible ceramic material, or by another suitable material providing a flexibility of a shape of the substrate 102.

The flexible substrate 102 may for instance have a thickness of 1-100 µm, such as 15 µm. The flexible substrate 102 may have a relatively large surface area, such as having dimensions in the order of centimeters, or tens of centimeters. However, it should be realized that the thickness and size of the flexible substrate 102 may depend on an application of the force sensing device 100.

The force sensing device 100 may comprise a protective coating layer 104 (see Fig. 2) arranged on the surface of the flexible substrate 102. The force sensing device 100 may in particular comprise the protective coating layer 104 if the flexible substrate 102 is formed from a material having a hygroscopic behavior, such as a polymeric substrate.

The protective coating layer 104 may provide an insulation from water and moisture absorption by sensor units 112 or other parts of the force sensing device 100. The protective coating layer 104 may provide insulation against any gas and/or liquid.

The protective coating layer 104 may provide a barrier for humidity and water that may otherwise cause corrosion, nanofiltration, swelling and loss of strength. The protective coating layer 104 may also prevent stiction and oxide bridging between structures in the force sensing device 100 to avoid altering of conductivity of electronics and altering of mechanical behavior in the sensor units 112 based on water absorption providing added mass, spring and damping effects to mechanical parts of the sensor units 112.

The protective coating layer 104 may be formed by aluminum oxide, silicon nitride, silicon oxide or polycrystalline silicon. Other materials may alternatively be used.

The force sensing device 100 may further comprise an electric connection layer 106. The electric connection layer 106 may be formed based on thin-film technology allowing thin-film transistors to be formed in a thin layer structure arranged on the flexible substrate 102.

The electric connection layer 106 may be connected to component(s) of the sensor units 112 so as to form read-out circuitry connected to the sensor units 112. The electric connection layer 106 may also provide signals or potentials for controlling component(s) of the sensor units 112.

The electric connection layer 106 may provide connection to a controller unit that may receive signals from the sensor units 112 via read-out by the electric connection layer 106 and/or may provide control signals to the sensor units 112. The electric connection layer 106 may provide transport of signals such that the controller unit may be freely arranged in relation to the sensor units 112, such as at a lateral part that need not necessarily be flexible.

The electric connection layer 106 may provide integrated electronics able to select sensor units 112 that are in contact with an object for sensing a force. Hence, the force sensing device 100 may scan a stress map when contact occurs.

The electric connection layer 106 may be connected to the controller unit, such as a microcontroller unit, such that the controller unit may regularly send signals to the electric connection layer 106, such as a few times per second, to check a contact response from sensor units 112.

This implies that power consumption may be limited, since all of the sensor units 112 of the force sensing device 100 need not be constantly turned on. This is particularly suitable for a force sensing device 100 that may only detect forces intermittently, such as a few times per minute.

The protective coating layer 104 and the electric connection layer 106 may extend along the entire surface of the flexible substrate 102 or at least along an entire area of the flexible substrate 102 at which sensor unit(s) 112 are arranged.

The protective coating layer 104 and the electric connection layer 106 may also be flexible so as to allow bending of the substrate 102 without breaking of the protective coating layer 104 or the electric connection layer 106.

The electric connection layer 106 may include electric connections for transport of electric signals from the sensor units 112 to the circuitry of the electric connection layer 106. The electric connection layer 106 may be as flexible as the substrate 102 and the protective coating layer 104 so as to allow bending of the substrate 102. This may be achieved using flexible metal connections.

The sensor unit 112 will now be described in detail, referring to Fig. 2 illustrating a cross-section along line A-A in Fig. 1.

The configuration of the sensor unit 112 may be symmetric with respect to vertical planes, extending in a direction perpendicular to the flexible substrate 102 and passing through a center of the sensor unit 112. However, a non-symmetric configuration may alternatively be used. This may be useful for achieving a different range of sensitivity with respect to force directions in three dimensions. It should be realized that the cross-section shown in Fig. 2 is not taken along a symmetry axis in order to better illustrate features of the sensor unit 112.

The sensor unit 112 comprises at least one first electrode 114a-d arranged in a first layer 116 on the surface of the flexible substrate 102. The first layer 116 may be arranged directly on the electric connection layer 106. The at least one first electrode 114a-d may be patterned on the electric connection layer 106 and each first electrode 114a-d may be electrically connected to the electric connection layer 106.

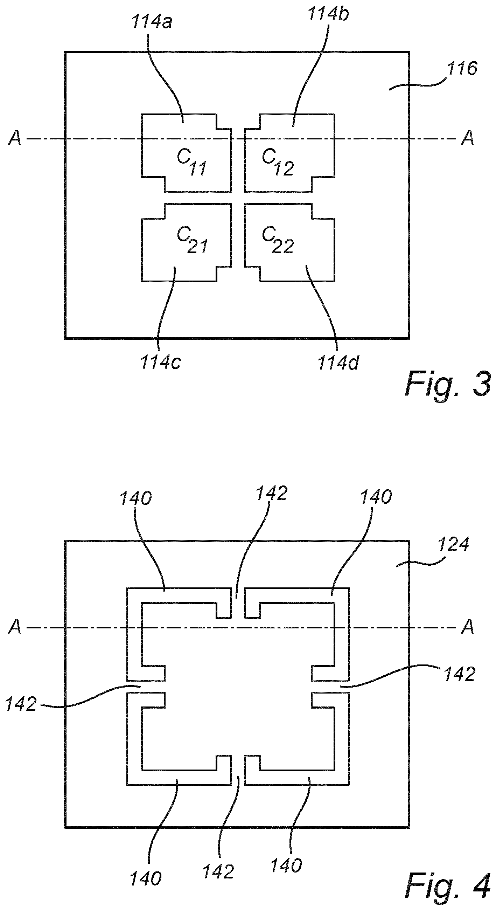

Fig. 3 shows a top view of a configuration of the first electrodes 114a-d according to an embodiment. Thus, the sensor unit 112 comprises a plurality of first electrodes 114a-d each defining a separate area in the first layer 116. Fig. 3 also illustrates the cross-section A-A which is shown in Fig. 2.

Each of the first electrodes 114a-d may form part of a respective force sensitive component such that a plurality of force sensitive components is defined in the sensor unit 112. The force sensitive components enable differential detection of forces to enable detection of shear forces by the sensor unit 112.

The first electrodes 114a-d are symmetrically arranged around a central point on the first layer 116. As shown in Fig. 3, the first electrodes 114a-d are symmetrically arranged in relation to each of two orthogonal symmetry axes in the first layer 116 corresponding to two orthogonal vertical planes through the sensor unit 112. This implies that shear forces may be detected with equal sensitivity in two directions.

The first electrodes 114a-d may be formed by an electrically conducting material, such as a metal. For instance, the first electrodes 114a-d may be formed by titanium, platinum, aluminum, or a combination thereof. The first electrodes 114a-d may be surrounded by a dielectric material, separating the electrodes 114a-d from each other. The dielectric material may for instance be a ceramic material, such as silicon nitride, silicon oxide or polycrystalline silicon.

The first layer 116 may be a thin layer. For instance, the first layer 116 may have a thickness in a range of 50 - 500 nm, such as 100 nm. However, it should be realized that other thicknesses may also be used depending on the application of the force sensing device 100.

The first electrodes 114a-d may also be covered by a first dielectric layer 118, being formed on the first layer 116. A material of the first dielectric layer 118 may for instance be silicon nitride, silicon oxide or polycrystalline silicon. The first dielectric layer 118 may have a thickness of 10 - 100 nm, such as 50 nm. However, it should be realized that other thicknesses may also be used depending on the application of the force sensing device 100.

Referring again to Fig. 2, the sensor unit 112 further comprises an intermediate structure 130 arranged on the first layer 116. The intermediate structure 130 may be formed in a layer on the first layer 116 or on the first dielectric layer 118 arranged on the first layer 116.

The intermediate structure 130 may be patterned above the first electrodes 114a-d. The intermediate structure 130 may comprise spacer structures 134 in the layer above the first layer 116, wherein the spacer structures 134 are laterally displaced in relation to the first electrodes 114a-d, such that a projection of the spacer structures 134 onto a plane of the first layer is arranged beside the first electrodes 114a-d. The spacer structures 134 may support layers arranged above the intermediate structure 130.

The spacer structures 134 may further define side walls defining a cavity in the layer on the first layer 116, wherein the cavity is arranged above the first electrodes 114a-d. A projection of the cavity onto the first layer may define an area in the first layer 116 encompassing all of the first electrodes 114a-d.

The cavity may be filled by a gas, such as air, or a vacuum may be provided in the cavity.

According to an alternative, as shown in Fig. 2, the intermediate structure 130 may be patterned comprising a material 132 arranged above the first electrodes 114a-d. The material 132 may be arranged such that a projection of the material 132 may define an area in the first layer 116 encompassing all of the first electrodes 114a-d. The intermediate structure 130 may further comprise side walls surrounding the material 132.

The material 132 may be a force sensitive material which is configured to change electric characteristics based on receiving a force. The material 132 may also or alternatively be deformable allowing a structure above the first electrodes 114a-d to be deformed upon receiving a force. For instance, the material 132 may be polyimide, providing a deformable structure above the first electrodes 114a-d.

The material 132 or cavity arranged above the first electrodes 114a-d may have a thickness in a range of 100 - 500 nm. However, it should be realized that other thicknesses may also be used depending on the application of the force sensing device 100.

The sensor unit 112 may further comprise a second dielectric layer 136, being formed on the intermediate structure 130. A material of the second dielectric layer 136 may for instance be silicon nitride, silicon oxide or polycrystalline silicon. The second dielectric layer 136 may have a thickness of 10 - 100 nm, such as 50 nm. However, it should be realized that other thicknesses may also be used depending on the application of the force sensing device 100.

The dielectric material in the second dielectric layer 136 may extend above the first electrodes 114a-d such that a projection of the second dielectric layer 136 onto the first layer 116 may define an area in the first layer 116 encompassing all of the first electrodes 114a-d. The dielectric material in the second dielectric layer 136 may further extend laterally such that an area of the projection of the second dielectric layer 136 onto the first layer 116 extends also beside the area of the first electrodes 114a-d.

Thus, the dielectric material in the second dielectric layer 136 may be supported by the spacer structures 134 of the intermediate structure 130, in case a cavity is formed above the first electrodes 114a-d. Thus, the cavity may be defined between the first dielectric layer 118 and the second dielectric layer 136. However, in case the intermediate structure 130 comprises the material 132, the second dielectric layer 136 is also supported by the material 132.

The sensor unit 112 further comprises at least one second electrode 120 arranged in a second layer 122. The second layer 122 is arranged on the first layer 116 such that the first layer 116 is closer to the flexible substrate 102 than the second layer 122. It should be realized that the second layer 122 is not arranged directly on the first layer 116 but rather there are other structures in-between, including the intermediate structure 130 discussed above.

The at least one second electrode 120 may be patterned in the second layer 122. The at least one second electrode 120 may be patterned such that a projection of the at least one second electrode 120 may define an area in the first layer 116 corresponding to an area in which the first electrodes 114a-d are arranged. The projection of the at least one second electrode 120 may exactly match the area in which the first electrodes 114a-d are arranged or may be slightly larger than the area of the first electrodes 114a-d such that a deformation or movement of the at least one second electrode 120 upon a force being received by the sensor unit 112 does not displace the at least one second electrode 120 such that an area of overlap of the at least one second electrode 120 and the first electrodes 114a-d is not altered.

The sensor unit 112 may comprise a single second electrode 120, as shown in Fig. 2.

According to an alternative, the sensor unit 112 may comprise a plurality of second electrodes, having an equal number of second electrodes and first electrodes 114a-d. Each second electrode may be associated with a respective first electrode 114a-d forming pairs of first and second electrodes. Each second electrode may then define a separate area in the second layer 122, wherein a projection of the second electrode onto the first layer 116 forms an area corresponding to, and possibly slightly larger than, the area of the first electrode of the pair.

According to yet another alternative, the sensor unit 112 may comprise a plurality of second electrodes and a single first electrode. The projection of the second electrodes onto the first layer 116 may then be within an area of the single first electrode.

The at least one first electrode and the at least one second electrode according to any of the embodiments described above may be arranged to define an overlap of the area of a projection of the at least one second electrode onto the first layer and the area of the at least one first electrode in the first layer.

The at least one first electrode and the at least one second electrode may define a plurality of force sensitive components in the sensor unit. As shown in Fig. 2, the plurality of force sensitive components is defined by the plurality of first electrodes 114a-d in combination with a single second electrode 120. Thus, different force sensitive components of the plurality of force sensitive components may share the second electrode 120 while having different first electrodes 114a-d. However, it should be realized that the plurality of force sensitive components may alternatively be defined by different pairs of first and second electrodes, wherein the sensor unit comprises a plurality of first electrodes and a plurality of second electrodes, or the plurality of force sensitive components may be defined by a plurality of second electrodes, wherein different force sensitive components of the plurality of force sensitive components may share a single first electrode while having different second electrodes.

Below, the sensor unit 112 will be mainly described in relation to having a single second electrode 120, as shown in Fig. 2. However, it should be realized that the description may also apply to embodiments, wherein a plurality of second electrodes is provided.

The second electrode 120 may be formed by an electrically conducting material, such as a metal. For instance, the second electrode 120 may be formed by titanium, platinum, aluminum, or a combination thereof. The second electrode 120 may be surrounded by a dielectric material, providing dielectric material around the second electrode 120. The dielectric material may for instance be a ceramic material, such as silicon nitride, silicon oxide or polycrystalline silicon.

The second layer 122 may be a thin layer. For instance, the second layer 122 may have a thickness in a range of 50 - 500 nm, such as 100 nm. However, it should be realized that other thicknesses may also be used depending on the application of the force sensing device 100.

The second electrode 120 may also be covered by a third dielectric layer 124, being formed on the second layer 122. A material of the third dielectric layer 124 may for instance be silicon nitride, silicon oxide or polycrystalline silicon. The third dielectric layer 124 may have a thickness of 500 nm - 10 µm. However, it should be realized that other thicknesses may also be used depending on the application of the force sensing device 100. The thickness of the third dielectric layer 124 may be designed in relation to a desired thickness of the structure arranged above the first electrodes 114a-d for providing a suitable sensitivity of the force sensing device 100.

The sensor unit 112 further comprises at least one trench 140 in the second layer 122. The at least one trench 140 is configured to partially surround the second electrode 120. Fig. 4 shows a top view of the third dielectric layer 124 illustrating a configuration of the at least one trench 140 according to an embodiment. Fig. 4 also illustrates the cross-section A-A which is shown in Fig. 2.

The at least one trench 140 may form a cut vertically, i.e., in a direction perpendicular to an extension of the second layer 122, through the second layer 122. The at least one trench 140 may extend through the entire thickness of the second layer 122. The at least one trench 140 may also extend through the third dielectric layer 124 and the second dielectric layer 136. The at least one trench 140 may also extend through at least part of the thickness of the intermediate structure 130.

The at least one trench 140 may form a path in the second layer 122 that at least partially surrounds a part of the second layer 122 in which the second electrode 120 is arranged. Thus, the at least one trench 140 may define a part of the second layer 122 that is used for detecting the force being received by the sensor unit 112.

The path of the at least one trench 140 in the second layer 122 may be interrupted by at least one bridging structure 142. Thus, the at least one trench 140 does not form a closed path in the second layer 122. Each bridging structure 142 may form a continuous arrangement of the dielectric material of the second layer 122. Thus, the bridging structure 142 provides an anchoring position for the part of the second layer 122 including the second electrode 120. The anchoring position provides a fixed relation between the first layer 116 and the second layer 122.

The sensor unit 112 may comprise only one trench defining a path that partially surrounds the part of the second layer 122 including the second electrode 120. The trench may form an almost closed path with one bridging structure being arranged such that the path of the trench is not fully closed. However, as shown in Fig. 4, the sensor unit 112 may comprise a plurality of bridging structures 142 which may form interruptions of paths of more than one trench 140, such that a plurality of trenches 140 and a plurality of bridging structures 142 may be provided. This implies that the part of the second layer 122 that includes the second electrode 120 may have a plurality of anchoring positions.

According to an embodiment, the at least one trench 140 may define an outer circumference of a shape of the part of the second layer 122 that includes the second electrode 120. The at least one bridging structure 142 is provided to connect portions of the second layer 122 on opposite sides of the at least one trench 140 for providing anchoring positions of the part of the second layer 122 that includes the second electrode 120. However, each bridging structure 142 may be relatively small.

The shape of the part of the second layer 122 that includes the second electrode 120 may be defined by the path of the at least one trench 140 being closed by an imaginary line across the bridging structure 142, wherein the imaginary line follows extensions of the at least one trench 140 on opposite sides of the bridging structure 142.

As shown in Fig. 4, the trenches 140 may have extensions that follow an overall quadrilateral path, defining a quadrilateral shape of the second layer 122 that is partially surrounded by the trenches 140. The trenches 140 may include corners of the quadrilateral shape, such that the trenches 140 define 90° turns of the path in the second layer 122. The bridging structures 142 may be arranged at sides of the quadrilateral shape. The path of the trenches 140 in the second layer 122 may be closed by imaginary line across the bridging structures 142 that close the path of trenches between two corners of the quadrilateral shape.

The part of the second layer 122 surrounded by the trenches 140 may have free ends corresponding to a discontinuity in the second layer 122 on opposite sides of the trenches 140. In particular, such free ends may be present at corners of the quadrilateral shape defined in the second layer 122. Even though the trenches 140 may be filled by a material, such as an elastic material as described below, the part of the second layer 122 surrounded by the trenches 140 may still be considered to have free ends, since the part of the second layer 122 surrounded by the trenches 140 is decoupled from other parts of the second layer 122 outside the trenches 140.

For instance, the free ends of the part of the second layer 122 surrounded by the trenches 140 may be movable in relation to the spacing in the second layer defined by the trenches 140 or by causing deformation of the elastic material in the trenches 140.

The trenches 140 may further make turns at the bridging structures 142 so as to extend a small distance into the quadrilateral shape at the bridging structures 142. This may facilitate decoupling of the free ends at the corners of the quadrilateral shape defined in the second layer 122 from parts of the second layer 122 outside the trenches 140.

The shape of the part of the second layer 122 defined by the trenches 140 may be symmetrical. This may facilitate detection of shear forces acting in a direction parallel to an extension of the second layer 122.

In particular, the shape of the part of the second layer 122 defined by the trenches 140 may be symmetrical around each of two perpendicular symmetry lines in the second layer 122. This may facilitate detecting shear forces in two dimensions, so as to divide a shear force being received by the sensor unit 112 into two components along perpendicular lines in a plane of the second layer 122.

As shown in Fig. 4, the sensor unit 112 may comprise four trenches 140 and four bridging structures 142, wherein the four bridging structures are arranged at respective sides of the quadrilateral shape of the part of the second layer 122 defined by the trenches 140.

This facilitates detecting shear forces in two dimensions. Thus, the force sensing device 100 may be configured for three-dimensional force detection since the sensor unit 112 may be configured to distinguish shear forces from pressure.

The four bridging structures 142 may be arranged such that the bridging structures 142 are arranged on two perpendicular symmetry lines of the shape of the part of the second layer 122 defined by the trenches 140. Thus, a structure of the second layer 122 is anchored in relation to symmetry lines of the shape of the structure. This implies that forces sensed by force sensitive components of the sensor unit 112 may be easily analyzed for determining components of the force in three dimensions.

It should be realized that the trenches 140 may be designed in many different manners defining different shapes of paths in the second layer 122. The sensor unit 112 may also be designed with different number of trenches 140 and bridging structures 142.

For instance, the sensor unit 112 may comprise a single trench extending almost completely around a part of the second layer 122, wherein the path of the trench in the second layer 122 is interrupted by a small, single bridging structure. In such case, the part of the second layer 122 that includes the second electrode 120 is provided with only one anchoring position providing a single fixed position, wherein the first layer 116 and the second layer 122 are fixed to each other. This configuration may be used for a sensor unit 112 that is able to distinguish shear forces from pressure but may not necessarily be able to divide shear forces into two components.

Having more than one bridging structure may ensure that shear forces may be divided into two perpendicular components for three-dimensional force detection by the sensor unit 112. The sensor unit 112 need not necessarily comprise four bridging structures for providing three-dimensional force detection, even though four bridging structures may provide accurate and robust detection of forces in three dimensions. The sensor unit 112 may for instance comprise two bridging structures. For instance, each of the bridging structures may be arranged on a respective symmetry line of the shape of the part of the second layer 122 surrounded by the trenches.

The trenches 140 may form a spacing in the second layer 122 (and in other layers through which the trenches 140 extend vertically) and may be filled by a gas, such as air. However, the trenches 140 may be filled by another material, such as an elastic material, as will be described below.

The bridging structures 142 may extend vertically through the sensor unit 112 so as to form a continuous material extending vertically through the first layer 116, the intermediate structure 130, and the second layer 122, and any further layers in-between. This implies that the bridging structures 142 each provide a fixed relation in an anchoring position between the first layer 116 in which the first electrodes 114a-d are arranged and the second layer 122 in which the second electrode 120 is arranged.

The bridging structures 142 may be formed by monolithically integrated structures extending from the first layer 116 to the second layer 122. The bridging structures 142 may for instance be formed by a dielectric material that is provided in each of the layers included in the bridging structure 142. Thus, even though the bridging structure 142 defines a shape in the second layer 122 forming a bridge between parts on opposite sides of the trench 140, the bridging structure 142 may further extend vertically in the sensor unit 112 so as to define the fixed relation between different layers in the anchoring position of the bridging structure 142.

As mentioned above, the first electrodes 114a-d and the second electrode 120 define force sensitive components. Each force sensitive component is defined by one first electrode 114a-d and the second electrode 120. The sensor unit 112 is configured to change characteristics between the first electrode 114a-d and the second electrode 120 upon a force being received by the sensor unit 112.

The first electrodes 114a-d may for instance form four independent capacitor electrodes. The second electrode 120 may form an opposite capacitor electrode that is shared by the four independent capacitor electrodes formed by the first electrodes. This defines four independent capacitors between the individual first electrodes 114a-d and the shared second electrode 120.

The sensor unit 112 may be configured such that the part of the second layer 122 that includes the second electrode 120 may be moved in relation to the first layer 116 upon a force being received by the sensor unit 112, for instance by the part of the second layer 122 being moved in relation to the cavity between the first electrodes 114a-d and the second electrode 120, or by the material 132 of the intermediate structure 130 being deformed.

The sensor unit 112 may thus be configured such that the distance between the first electrode 114a-d and the second electrode 120 may be changed upon a force being received by the sensor unit 112. This change of distance causes a change of characteristics of the force sensing device allowing the force to be detected. The distance between the first electrode 114a-d and the second electrode 120 may change in different manners for different force sensitive components depending on the direction of the force. A pressure acting in a direction perpendicular to the second layer 112 may have a same effect on different force sensitive components, whereas shear forces acting in a direction parallel to the second layer 112 provide different effects on different force sensitive components. Thus, differential detection may be used for detecting shear forces. In addition, detecting equal changes to characteristics of the force sensitive components may be used for detecting pressure.

The first electrodes 114a-d and the second electrodes 120 may form capacitors such that the sensor unit 112 may use a capacitive measurement for detecting forces. This may be based on the distance between the first electrode 114a-d and the second electrode 120 being changed for the force sensitive components upon the force being received by the sensor unit 112. However, the characteristics of the force sensitive components may alternatively be changed by the material 132 between the first electrode 114a-d and the second electrode 120 being a force sensitive material that may be configured to change electric characteristics based on a force acting on a surface of the force sensitive material, without the force sensitive material necessarily being deformed.

It should be realized that the sensor unit 112 may not necessarily use a capacitive measurement for detecting a change in characteristics of the force sensing device 100 based on the received force. Rather, the sensor unit 112 may alternatively use piezo-resistive, resistive, or piezo-electric mechanisms or combinations thereof for detecting the received force.

It should be realized that the thickness of the cavity between the first electrodes 114a-d and the second electrode 120 or the thickness of the material 132 therebetween may be related to sensitivity of the sensor unit 112, defining a nominal gap between electrodes of force sensitive components. The gap is variable based on design of the thickness of the cavity or the thickness of the material 132. This may be used for controlling sensitivity of the force sensing device 100 and/or adapting the force sensing device 100 to a particular application. It should further be realized that different sensor units 112 of the force sensing device 100 may have different nominal gaps between electrodes so as to provide different sensitivity to forces received by the force sensing device 100.

Each force sensitive component may be separately connected to the read-out circuitry for enabling separate read-out of the force sensitive components. Where force sensitive components share one of the electrodes, such as using a shared second electrode 120, different measurements by the different force sensitive components may be achieved by the different first electrodes 114a-d being separately connected to the read-out circuitry.

The first electrodes 114a-d may be connected to the read-out circuitry by being connected to the electric connection layer 106 on which the first electrodes 114a-d are arranged.

The force sensing device 100 may comprise electrical connections extending in the second layer 122 or otherwise along a direction of the extension of the flexible substrate 102. The second electrodes 120 may thus be connected to a desired potential by connections extending laterally along the second layer 122. The electrical connections may extend on the bridging structure 142. Second electrodes 120 of different sensor units 112 may be connected to each other, for instance along columns and/or rows of the sensor units 112 in an array. This may be used for addressing different sensor units 112 in the array in an efficient manner for read-out of forces by the array.

It should be realized that in a spacing between sensor units 112, there is no need for other electrical components than the electrical connections to the second electrodes 120. Thus, the force sensing device 100 may comprise a dielectric material between the electric connection layer 106 and the second layer 122 in-between neighboring sensor units. This dielectric material may not fill an entire spacing between the neighboring sensor units but may rather only be provided in a portion directly underneath lines providing electrical connections to the second electrodes 120. This may ensure that the forming of the sensor units 112 on the flexible substrate 102 may not substantially affect an ability of the flexible substrate 102 to be deformed, since the flexible substrate 102 may be deformed at least between the sensor units 112.

The force sensing device 100 may further comprise sensing components that may be integrated on the bridging structures 142. For instance, piezo-resistive, resistive, or piezo-electric strips may be arranged on the bridging structures 142 for sensing deformations in the second layer 122 in relation to the bridging structures 142 based on the force being received by the sensor unit 112.

The trenches 140 imply that in case the intermediate structure 130 comprises the material 132 between the first electrodes 114a-d and the second electrode 120, the material 132 is not confined in a closed space between the electrodes. Rather, the material 132 may deform to extend into the trenches 140 upon the force being received by the sensor unit 112. Thanks to the material 132 being allowed to extend into the trenches 140 upon receiving a force, a plateau in a response curve of the sensor unit 112 due to stiffening of a thin structure between the electrodes may be avoided. This implies that sensitivity of the sensor unit 112 above a threshold level of the received force is not affected by stiffening of the material 132.

The use of the material 132 between the electrodes also implies that initial deformation of the second layer 122 due to residual stress that may be induced during fabrication of part of the second layer 122 being suspended above the first layer 116 may be avoided. The material 132 may also ensure that stiction of a part of the second layer 122 to the first layer 116 upon deformation due to a received force may be avoided. If stiction would occur, the part of the second layer 122 becomes stuck to the first layer 116 without possibility to detach and continue sensing applied forces.

Referring again to Fig. 2, the sensor unit 112 further comprises a rigid projecting structure 150 arranged on the third dielectric layer 124. The rigid projecting structure 150 is arranged to project vertically from the second layer 122 in a direction away from the flexible substrate 102. The rigid projecting structure 150 may be mechanically connected to the second electrode 120 by being arranged directly on the second electrode 120 or via the third dielectric layer 124.

The rigid projecting structure 150 is arranged on the part of the second layer 122 being defined by the at least one trench 140. Thus, a projection of the rigid projecting structure 150 onto the second layer 122 may be arranged within the part of the second layer 122 being defined by the at least one trench 140.

The rigid projecting structure 150 may have a cross-section that is smaller than the size of the second layer 122 within the area defined by the trenches 140, such as having a substantially smaller cross-section, as illustrated in Fig. 2.

The rigid projecting structure 150 may have a relatively large height, i.e., thickness along the vertical direction in which the rigid projecting structure 150 projects. For instance, the heigh of the rigid projecting structure 150 may be larger than a size of the cross-section, such that the rigid projecting structure 150 may form a pillar projecting vertically from the second layer 122. The rigid projecting structure 150 may for instance have a height in a range of 10-100 µm, such as 50 µm. However, it should be realized that other dimensions of the rigid projecting structure may be used.

The rigid projecting structure 150 may be arranged centrally on the part of the second layer 122 defined by the trenches 140. Thus, a symmetry axis through the rigid projecting structure 150 may coincide with a symmetry axis through the second layer 122. This implies that the sensor unit 112 may have equal sensitivity of different directions of a shear force.

The rigid projecting structure 150 may be embedded in an elastic material 152. The rigid projecting structure 150 is connected to the second layer 122 for transferring the force received by the sensor unit 112 onto the part of the second layer 122 that includes the second electrode 120. The rigid projecting structure 150 may thus form an interlock to allow sensing of forces transmitted into the elastic material 152. The rigid projecting structure 150 may for instance be tilted in relation to the first layer 116 upon a force being received by the sensor unit 112.

The rigid projecting structure 150 may be formed by a relatively rigid material compared to the elastic material 152. Thus, the Young's modulus of a material of the rigid projecting structure 150 may be larger than, such as at least 10 times larger than Young's modulus of the elastic material 152.

For instance, the Young's modulus of the material of the rigid projecting structure 150 may be in the order of GPa or higher, such as larger than 1 GPa. Further, the Young's modulus of the elastic material 152 may be in the order of 10-100 MPa or smaller, such as smaller than 100 MPa. However, it should be realized that the rigid projecting structure 150 and/or the elastic material 152 may have different stiffness characteristics.

The rigid projecting structure 150 may for instance be formed by a highly cross-linked matrix of an organic epoxy permanent material, such as for example SU-8 that may be supplied by Kayaku Advanced Materials, Inc., TMMF^{™} NA1050HQ3, TMMF^{™} NA1000-PM supplied by Tokyo Ohka Kogyo Co., Ltd., or similar materials. The material of the rigid projecting structure 150 may be thermally stable and chemically inert.

The elastic material 152 may for instance be a silicon-based rubber, such as polydimethylsiloxane (PDMS) or photosensitive siloxane based materials, such as, SINR^{™}-3170 supplied by Shin-Etsu MicroSi, Inc.

The elastic material 152 may provide a cushioning effect to the sensing structure below. This is due to the fact that the elastic material 152 and the sensing structure work as in parallel mechanical systems when the stress is applied. Therefore, the elastic material 152 protects the sensor unit 112. In particular, the elastic material 152 provides protection against wear and stress-induced fractures and raptures of the sensor unit 112. The elastic behavior of the elastic material 152 can be tuned to achieve different levels of rigidity that implies different levels of protection for the sensor unit 112. A more rigid elastomer composition results in a more cushioning behavior that transmits less stress to the sensor unit 112 that is more protected against stress-induced fractures and raptures and wear. Changing the stiffness is possible by changing proportion of curing agents of an elastomeric solution. Moreover, also the sensitivity of the sensor unit 112 can be tuned by changing the elastic stiffness of the elastic material 152.

The rigid projecting structure 150 may also act as a stabilizing part for a suspended sensing structure. Thus, if the sensor unit 112 comprises a cavity between the first electrodes 114a-d and the second electrode 120, the suspended structure including the second electrode 120 may be stabilized by the rigid projecting structure 150.

The rigid projecting structure 150 may thus provide a solution to mitigate initial deformation of the part of the second layer 122 including the second electrode 120 due to residual stress. The rigid projecting structure 150 may thus be used for avoiding fabrication-induced residual stresses of the suspended structure adding an extra rigidity to the sensor unit 112. In fact, the residual stress re-distributes and attenuates in the rigid projecting structure 150, keeping a central part of the second layer 122 flat. Hence, the rigid projecting structure 150 prevents or mitigates initial deformations of the second layer 122 due to residual stress and associated changes of the gap between the electrodes and designed sensitivity of the force sensitive components.

The dimensions in a cross-section of the rigid projecting structure 150 in a plane perpendicular to a direction of projection of the rigid projecting structure 150 may be tuned to counteract the effect of the residual stress and get a straight configuration of the second layer 122 without central deformation of the second layer 122, instead of having an initial bent shape governed by the residual stresses.

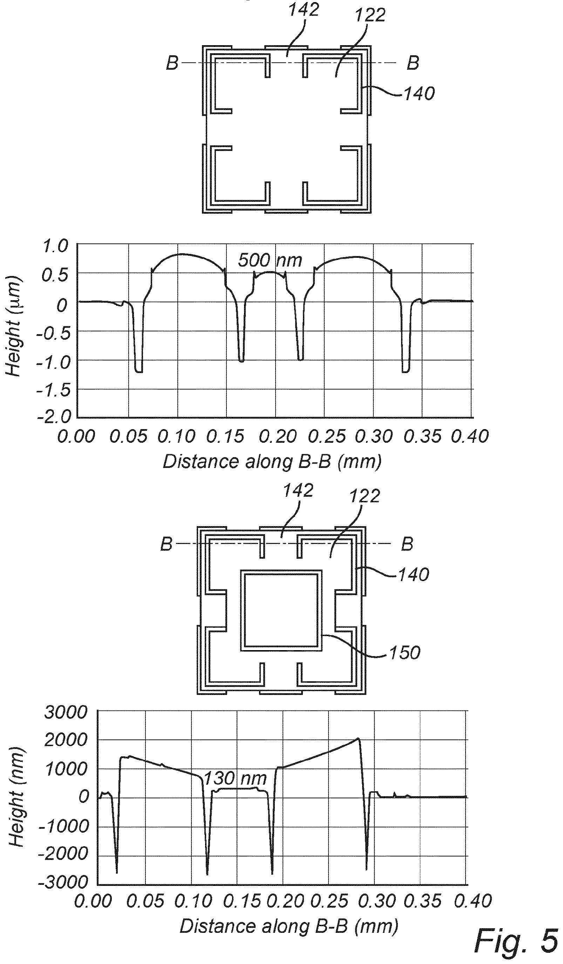

The effect of the rigid projecting structure 150 is indicated in Fig. 5. In the top part of Fig. 5, a top view of the second layer 122 without the rigid projecting structure 150 is illustrated and a shape of the second layer along cross-section B-B is illustrated in the graph below the top view. In the bottom part of Fig. 5, a top view of the second layer 122 with the rigid projecting structure 150 is illustrated and a shape of the second layer along cross-section B-B is illustrated.

It is worth noting that a non-deformed bridge suspension configuration is related to the lowest stress regime and hence to the safest stress configuration with respect to the stress-induced crack or raptures. In Fig. 5 the bridge suspension configuration was designed 130 nm higher than a level of the second layer 122 at a boundary outside the trenches 140, i.e., at an end of the cross-section line B-B. In addition, the bridge suspension configuration is kept at such shape after release of the second layer 122 with the rigid projecting structure 150 (i.e., after the cavity is formed by removing a sacrificial structure). The obtained configuration without the rigid projecting structure 150 presents an initial bent deformation of around 500 nm, with an increase of gap between the first and second electrodes of 3 times greater than the designed gap. It is more convenient to mitigate the deformation induced by the residual stress by varying dimensions of the rigid projecting structure 150 instead of controlling the fabrication-induced stresses. Further, the height of the rigid projecting structure 150 may be tuned to achieve different shear sensitivity.

The elastic material 152 may be provided in the trenches 140. Thus, the elastic material 152 may be filled into formed trenches 140 when the force sensing device 100 is manufactured.

When a cavity is provided between the electrodes, the cavity may be formed by wet etching of a sacrificial layer defining the cavity. The subsequent deposition of the elastic material 152, such as SINR, does not penetrate the narrow trenches, which may have a width in the order of 10 µm, and further fill the thin cavity, which may have a thickness in the order of 100 nm, due to viscosity of the solution of the elastic material 152. A water relative viscosity of the solution of the elastic material 152 may be approximately 1000, and the solution may thus stop in the trench depth so as not to enter the cavity between the electrodes. The dimensions of the trenches 140 and the cavity do not form a barrier to an acid solution during wet etching of the sacrificial layer since the water relative viscosity of the acid etchant may be around 1.

The force sensing device 100 may further be provided with a coating layer 154 arranged on the elastic material 152. The coating layer 154 may provide an extra insulation against any gas and/or vapor. The coating layer 154 may for instance be formed by Parylene-C.

The sensor unit 112 may be provided with a ceramic coating surrounding force sensing structures. Thus, the ceramic coating may be provided, for instance, by dielectric materials surrounding the first electrodes 114a-d in the first layer, dielectric materials in the intermediate layer 130 and dielectric materials in the second layer 122 surrounding the second electrode 120. The ceramic coating may be formed for instance by silicon nitride, silicon oxide or polycrystalline silicon. The ceramic coating may ensure that the sensor unit 112 is stable with respect to thermal and magnetic effects from the surrounding environment. Hence the sensor unit 112 may not be subject to thermal and magnetic drifts because of environmental exposure during use of the sensor unit 112.

In comparison to a sensor unit formed by polymer-based force sensors, the sensor unit 112 according to embodiments of the present invention is stable also with respect to long-term deformation (> 1h) caused by creep of polymeric material in the sensor unit 112, reduction of volume and subsequent shortening deformation caused by shrinkage of polymeric material in the sensor unit 112, and relaxation of polymeric material in the sensor unit 112 that results in a loss of stress and so loss of sensitivity after a long term (> 1h) applied external force. Thanks to the sensor unit 112 being protected from thermal and magnetic effects, the sensor unit 112 may be used for static force sensing applications.

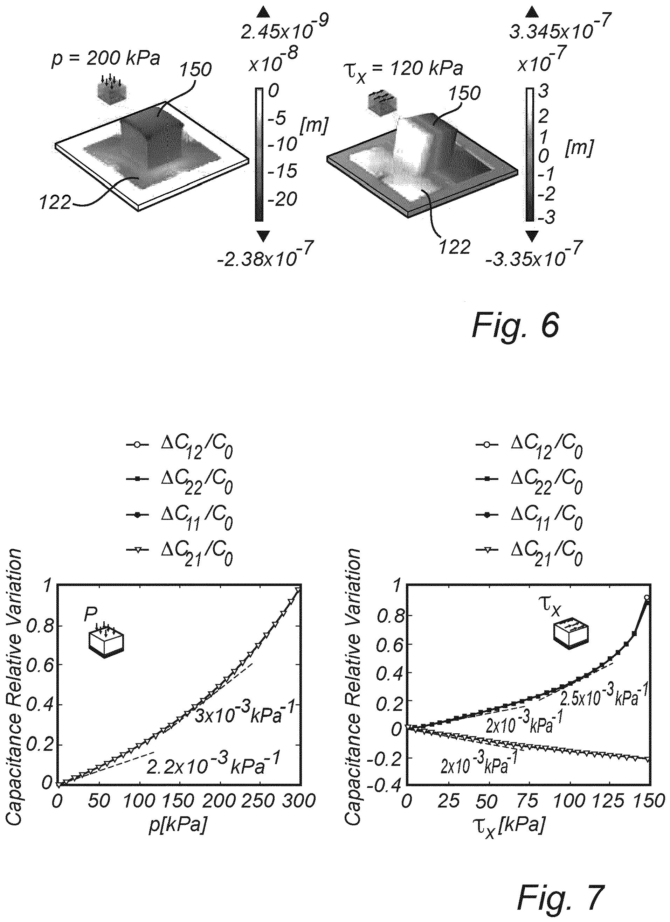

Referring now to Figs 6-7, force detection using the sensor unit 112 will be described in relation to simulation examples based on a sensor unit 112 as shown and described above in relation to Figs 2-4, wherein the sensor unit 112 has a footprint area of 250×250 µm². Fig. 6 illustrates on left side the rigid projecting structure 150 and the second layer 122 of the sensor unit 112, when the sensor unit 112 is subject to a pressure of 200 kPa acting in a direction perpendicular to a surface of a nominal arrangement of the second layer 122. As shown in Fig. 6, the sensor unit 112 may be symmetrically deformed to push the second layer 122 towards the first layer 116 upon receiving the pressure force. This implies that the distance between electrodes of the force sensitive components will decrease in the same manner for all force sensitive components.

Fig. 6 illustrates on right side the rigid projecting structure 150 and the second layer 122 of the sensor unit 112, when the sensor unit 112 is subject to a shear force of 120 kPa acting parallel to the surface of the nominal arrangement of the second layer 122. As shown in Fig. 6, the rigid projecting structure 150 may be tilted causing a movement of the second layer 122 such that a portion of the second layer 122 is moved towards the first layer 116 and another portion of the second layer 122 is moved away from the first layer 116 such that the distance between electrodes of some force sensitive components decreases while the distance between electrodes of other force sensitive components increases.

Fig. 7 illustrates on left side a graph of the capacitance relative variation for pressure forces in a range of 0 kPa - 300 kPa for different force sensitive components, corresponding to capacitances between each of the four electrodes 114a-d (referred to as C₁₁, C₁₂, C₂₁, C₂₂) in relation to the second electrode 120, compared to a zero-load capacitance (referred to as C₀), wherein the zero-load capacitance corresponds to the capacitance when no external force is applied to the sensor unit 112, defined by the overlapping area between the second electrode 120 and the corresponding one of the four first electrodes 114a-d. Fig. 7 illustrates on right side a graph of the capacitance relative variation for shear forces in a range of 0 kPa - 150 kPa. As is clear from Fig. 7, the effect of a pressure force provides identical output by all of the force sensitive components, whereas the effect of a shear force provides different output by different force sensitive components.

The sensing mechanisms of the sensor unit 112 related to pressure and shear detection are characterized by respectively a vertical translation (see Fig. 6 (left)) and a rotation of the sensing structure (see Fig. 6 (right)). This effect is due to the behavior of the vertical displacement and tilting of the central rigid projecting structure 150 being transmitted to the second layer 122 and inducing a vertical translation and a rotation of the second layer 122 of the sensing structure. It should be realized that the sensing mechanisms may involve an elastic deformation of the bridging structures 142 and the sensing structure including the rigid projecting structure 150, and the sensing mechanisms may also involve that structures on opposite sides of a gap between the first and second electrodes come into contact with each other.

When a combination of pressure and shear forces act on the sensor unit 112, the deformed configuration is characterized by superposition of the displacements related to each force component. Hence, a vertical downward translation related to pressure is superimposed to a rotation around a horizontal axis passing through a center of the second layer 122. This provides decoupling of the sensing mechanisms, and a differential sensing by the force sensitive components is possible for shear detection. Therefore, any combination of applied forces can be reconstructed by independently sensing the variations of the four capacitive measurements by the force sensitive components.

As the four electrodes 114a-d are arranged in a double symmetrical manner (symmetrically arranged relative to two perpendicular lines in the first layer 116), the shear response along an x-axis and a y-axis is numerically equal.

For the simulations provided in Fig. 7 based on the structure shown in Figs 2-4, the minimum pressure sensitivity of the sensor unit 112 is 2.2×10⁻³ kPa-' at a pressure of 1 kPa, while the pressure sensitivity of the sensor unit 112 is 3.0×10⁻³ kPa-' at a pressure of 175 kPa. Further, the minimum shear sensitivity of the sensor unit 112 is 2.0×10⁻³ kPa⁻¹ at a shear force of 1 kPa, while the shear sensitivity of the sensor unit 112 is 2.5×10⁻³ kPa⁻¹ at a shear force of 100 kPa.

Although a single sensor unit 112 is mainly discussed above, it should be realized that the force sensing device 100 may comprise a plurality of sensor units 112 that may be arranged in an array.

As illustrated in Fig. 1, the force sensing device 100 may comprise elastic material 152 between neighboring sensor units 112. Layers of the force sensing device 100 extending over an entire area of the force sensing device 100 may be flexible. This implies that the flexible, non-stretchable substrate 102 provides a flexibility of the force sensing device 100 while the sensor units 112 act as rigid sensing islands on the flexible substrate 102.

During bending of the flexible substrate 102, deformation of the substrate 102 is concentrated only on the area between the sensor units 112 where there are no sensing parts. Hence, the performance of the force sensing device 100 for sensing forces is not affected by the flexible behavior of the flexible substrate 102.

Thus, interference and cross-talk induced by bending deformations and applied stresses during deformation of polymeric sensors may be avoided, such that the bending of the flexible substrate 102 does not affect the sensing response of the sensor units 112. Furthermore, load-induced deformations applied on an upper contact surface are concentrated in a region of the contact and do not extend to neighboring sensor units 112. Thus, cross-talk or interference among the sensor units 112, due to the stress being distributed, can be avoided and deformation being settled may not affect the neighboring sensor units 112.

It should also be realized that the sensor units 112 may be manufactured in a miniaturized manner, such that each sensor unit 112 may have a small size (i.e. a size of a side of the sensor unit 112 or a diameter of the sensor unit 112), such as a size smaller than 1 mm, such as smaller than 500 µm, such as smaller than 200 µm. The flexible substrate 102 may be deformed in locations between neighboring sensor units 112. Since the sensor units 112 are small, neighboring locations in which deformation of the flexible substrate 102 may take place are close to each other. This implies that even though the flexible substrate 102 may be deformed only in locations between sensor units 112, the force sensing device 100 is still highly flexible.

Further, since the sensor units 112 are small, neighboring sensor units 112 may also be spaced apart by a distance that is relatively large compared to a size of the sensor units 112. The force sensing device 100 may still have a high resolution of sensitivity over the area of the force sensing device 100. For instance, a spacing between neighboring sensor units 112 (such as between trenches of neighboring sensor units 112) may be larger than 1/4 of the size of the sensor unit 112, such as larger than 1/2 of the size of the sensor unit 112.

A pitch of sensor units 112 in the array may be smaller than 1 mm, such as smaller than 500 µm, such as smaller than 200 µm. This implies that the force sensing device 100 may detect forces with a high resolution over an area of the force sensing device 100.

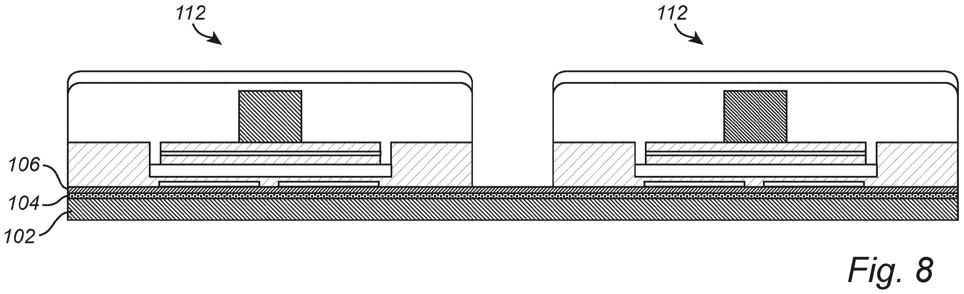

Referring now to Fig. 8 showing a cross-section of two neighboring sensor units 112, the sensor units 112 may be separated by a free space, at least in cross-sections where no connections to the second electrodes 120 may be provided. This may further facilitate deformation of the flexible substrate 102 in locations between neighboring sensor units 112.

In addition, the free space between the neighboring sensor units 112 may allow the elastic material 152 to deform without affecting the sensor unit 112. For instance, if a thermally induced deformation of the elastic material 152 occurs, the elastic material 152 may deform upwards (in a direction away from the substrate 102 and the sensor unit 112 below) and laterally (along a direction parallel to the substrate 102) without affecting the sensor unit 112.

As shown in Fig. 8, each sensor unit 112 may form a separate part projecting from the flexible substrate 102. For instance, each sensor unit 112 may have a shape of a bulge on the flexible substrate 102. This may allow the force sensing device 100 to provide a firm grip with a surface of an object in contact with the force sensing device 100 so as to provide high sensitivity to shear forces and to avoid cross-talk interference between sensor units 112.

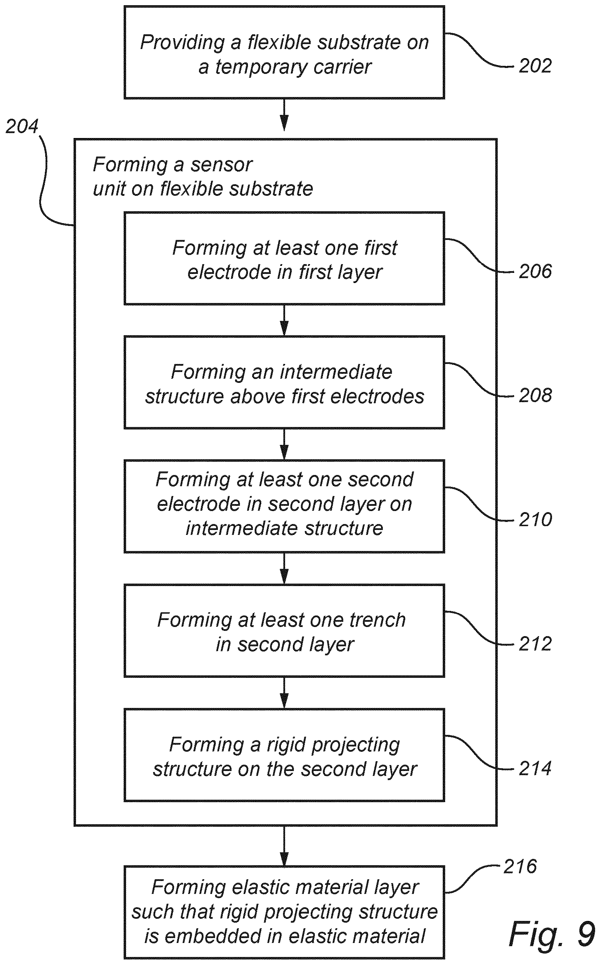

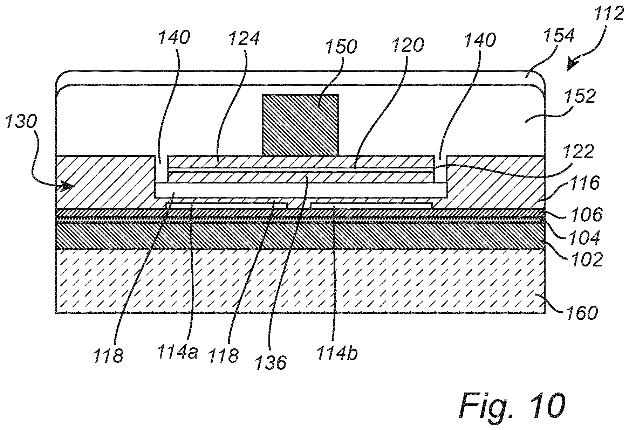

Referring now to Figs 9-10, a method for manufacturing the force sensing device 100 will be described. Fig. 9 shows a flow chart of the manufacturing method, whereas Fig. 10 shows a cross-section of a sensor unit 112 during manufacturing of the force sensing device 100, wherein the cross-section shown in Fig. 10 corresponds to the cross-section A-A of Fig. 1.

The method may comprise providing 202 a flexible substrate 102 on a temporary carrier substrate 160, as shown in Fig. 10. The temporary carrier substrate 160 may be rigid forming a rigid structure during manufacturing, which may facilitate accurate forming of the force sensing device 100. The temporary carrier substrate 160 may for instance be a glass wafer.

The flexible substrate 102 may for instance have a thickness of 1-100 µm, such as 15 µm. The flexible substrate 102 may have a relatively large surface area and may be formed to extend over the entire surface of the carrier substrate 160.

The method may further comprise forming a protective coating layer 104 on the flexible substrate 102. The protective coating layer 104 may be formed by aluminum oxide, silicon nitride, silicon oxide or polycrystalline silicon. The protective coating layer 104 may be formed to extend over the entire surface of the flexible substrate 102.

The method may further comprise forming an electric connection layer 106 on the protective coating layer 104 or directly on the flexible substrate 102. The electric connection layer 106 may be formed based on thin-film technology allowing thin-film transistors to be formed in a thin layer structure arranged on the flexible substrate 102. The electric connection layer 106 may thus include several sub-layers for defining transistors on the flexible substrate 102. The forming of the electric connection layer 106 may include patterning of the layer 106 so as to provide a desired functionality of the electric connection layer 106. The electric connection layer 106 may also be formed to extend over the entire surface of the flexible substrate 102.

The method may further comprise forming 204 a sensor unit 112 on the flexible substrate 102. The sensor unit 112 may be formed on the electric connection layer 106, i.e., not necessarily directly on the flexible substrate 102. If a plurality of sensor units 112 are to be formed, the plurality of sensor units 112 may be formed simultaneously on different parts of the flexible substrate 102.

The forming of the sensor unit 112 comprises forming 206 at least one first electrode, such as the first electrodes 114a-d, in a first layer 116 on the flexible substrate 102. The forming of the first electrodes 114a-d may involve patterning of the first layer 116, such that metal electrodes 114a-d, e.g., titanium/platinum or titanium/aluminum/titanium, are formed in ceramic trenches provided in for example silicon nitride, silicon oxide or polycrystalline silicon. The first layer 116 may for instance have a thickness of 100 nm.

The forming of the sensor unit 112 may further comprise forming a thin first dielectric layer 118 on the first electrodes 114a-d and extending over the entire surface of the first layer 116 in the sensor unit 112. The first dielectric layer 118 may be formed by for example silicon nitride, silicon oxide or polycrystalline silicon. The first dielectric layer 118 may for instance have a thickness of 50 nm.

The forming of the sensor unit 112 further comprises forming 208 an intermediate structure 130 above the first electrodes 114a-d. This may involve patterning a structure that is arranged above the first electrodes 114a-d to define characteristics between electrodes of the sensor unit 112. Thus, the structure initially formed may be patterned to only be arranged in an area corresponding to the first electrodes 114a-d.

The patterned structure may for instance be formed by chromium or aluminum forming a sacrificial structure that may later be removed in a release process for forming an empty cavity between the electrodes of the sensor unit 112.

The patterned structure may alternatively be formed by a material 132 that is to be arranged between the electrodes of the sensor unit 112. For instance, the material 132 may be a polymer, such as polyimide.

The thickness of the patterned structure is variable and related to a gap between electrodes of the sensor unit 112. Thus, the thickness may be designed in relation to desired sensitivity of the sensor unit 112. For instance, the thickness of the patterned structure may be 100 - 500 nm.

The forming of the sensor unit 112 may further comprise forming a second dielectric layer 136 on the intermediate structure. The second dielectric layer 136 may be formed only on the sacrificial structure or on the material 132 that is patterned for defining the characteristics between the electrodes of the sensor unit 112. The second dielectric layer 136 may be formed by for example silicon nitride, silicon oxide or polycrystalline silicon. The second dielectric layer 136 may for instance have a thickness of 50 nm.

The forming of the sensor unit 112 may further comprise forming 210 at least one second electrode, such as one second electrode 120, in a second layer 122 on the intermediate structure. The second electrode 120 may for instance be formed by patterning the second electrode 120 on the second dielectric layer 136. The second electrode 120 may be formed as a metal electrode 120, e.g., titanium/platinum or titanium/aluminum/titanium, in a second layer 122 having a thickness of 100 nm.

The forming of the sensor unit 112 may further comprise forming a dielectric material on the second electrode 120 and around the patterned structures defining the structure between the electrodes of the sensor unit 112 and defining the second electrode 120. This implies that support structures of the intermediate structure may be formed so as to provide a support for the part of the second layer 122 that includes the second electrode 120 in case a cavity will later be formed between the first and second electrodes.

This may provide a 500 nm - 10 µm thickness of dielectric material above the second layer 122, defining a third dielectric layer 124 above the second layer 122. The dielectric material may be provided on an entire surface of the sensor unit 112 corresponding to a surface of the first dielectric layer 118. The dielectric material may be for example silicon nitride, silicon oxide or polycrystalline silicon.

The forming of the sensor unit 112 further comprises forming 212 at least one trench 140 in the second layer 122, wherein the at least one trench 140 is configured to partially surround the at least one second electrode 120. For instance, four trenches 140 may be formed partially surrounding the second electrode 120.

The trenches 140 may be formed such that at least one bridging structure 142, such as four bridging structures 142, are configured to connect portions of the second layer 122 on opposite sides of the trenches 140. Each bridging structure 142 is thus configured to provide an anchoring position for providing a fixed relation between the first layer 116 and the second layer 122 within the sensor unit 112 in the anchoring position.

The trenches 140 may be formed by selectively removing dielectric material, such that the trenches 140 extend through the third dielectric layer 124, the second layer 122, and the second dielectric layer 136. The removing of the dielectric material may be stopped at the patterned structure provided between the first and second electrodes. In addition, the etching may be controlled to remove material 132 of the patterned structure at the trenches 140. This may allow the material 132 to deform laterally into the trenches 140 during use of the sensor unit 112.

The material 132 could be an epoxy-based resist or a similar organic material with elastic behavior similar to a polymer. For such materials, an etch process may be easily controlled. In addition, if the material 132 is polyimide, it is also possible to control etching of the material in correspondence with etching of the trenches.

The forming of the sensor unit 112 further comprises forming 214 a rigid projecting structure 150 on the second layer 122 projecting therefrom and mechanically connected to the second electrode 120. The rigid projecting structure 150 may be formed by patterning the rigid projecting structure 150 on the second layer 122, such as directly on the third dielectric layer 124.

The rigid projecting structure 150 may for instance be formed by a highly cross-linked matrix of an organic epoxy permanent material, such as for example SU-8 that may be supplied by Kayaku Advanced Materials, Inc., TMMF^{™} NA1050HQ3, TMMF^{™} NA1000-PM supplied by Tokyo Ohka Kogyo Co., Ltd, or similar materials. The material of the rigid projecting structure 150 may be thermally stable and chemically inert.

The thickness of the rigid projecting structure 150 may for instance be in a range of 10 - 100 µm, such as 50 µm.

In case a sacrificial structure is formed between the first and second electrodes, the method may further comprise removing the sacrificial structure to form a cavity between the first and second electrodes. The sacrificial structure may be removed by selectively removing the material of the sacrificial structure using an etchant that may be provided to the sacrificial structure through the trenches 140.

The removing of the sacrificial structure may be performed after the rigid projecting structure 150 has been formed on the second layer 122. This implies that the rigid projecting structure 150 may act to prevent the part of the second layer 122 that includes the second electrode 120 to be initially deflected based on residual stresses, when the sacrificial structure is removed.

The sacrificial structure may for instance be removed using, for instance, a ceric ammonium nitrate based acid for removing a sacrificial structure formed by chromium or tetramethylammonium hydroxide (TMAH) for removing a sacrificial structure formed by aluminum.

The method further comprises forming 216 an elastic material layer such that the rigid projecting structure 150 is embedded in an elastic material 152 for allowing the rigid projecting structure 150 to be tilted in relation to the first layer 116 upon receiving a force. The elastic material 152 may extend into the trenches 140. The elastic material 152 may at least be provided to extend over an entire surface of the sensor unit 112 such as over an entire surface defined by the dielectric material formed on opposite sides of the trenches 140.

The elastic material layer may be formed with a thickness exceeding the thickness of the rigid projecting structure 150 such that the elastic material 152 is provided on the rigid projecting structure 150.

The elastic material 152 may for instance be a silicon-based rubber, such as polydimethylsiloxane (PDMS) or photosensitive siloxane based materials, such as, SINR^{™}-3170 supplied by Shin-Etsu MicroSi, Inc.

The method may further comprise forming a coating layer 154 arranged on the elastic material 152. The coating layer 154 may provide an extra insulation against any gas and/or vapor. The coating layer 154 may be provided to extend over an entire surface of the elastic material 152. The coating layer 154 may for instance be formed by Parylene-C.

Finally, the method may comprise removing the temporary carrier substrate 160. Thus, the flexible substrate 102 may be de-bonded from the temporary carrier substrate 160. This implies that a flexible force sensing device 100 is provided, which may provide a large area sensor on a flexible substrate 102 that may be highly adaptable to different shapes of three-dimensional surfaces on which a force sensing device 100 may be desired.

It should be realized that the method for manufacturing of the force sensing device may be varied in a number of ways as would be understood by the person skilled in the art. For instance, wafer-to-wafer bonding may be used with subsequent delamination of the force sensing device from the wafers.

In the above the inventive concept has mainly been described with reference to a limited number of examples. However, as is readily appreciated by a person skilled in the art, other examples than the ones disclosed above are equally possible within the scope of the inventive concept, as defined by the appended claims.

It should be realized that some of the layers in the sensor unit 112 described above may not be necessary. For instance, the first, second, and third dielectric layers may not necessarily be part of the sensor unit 112.

## Claims

1. A force sensing device (100) comprising:
a flexible substrate (102);
at least one sensor unit (112) arranged on the flexible substrate (102), wherein the sensor unit (112) comprises:
at least one first electrode (114a-d) arranged in a first layer (116) on a first surface of the flexible substrate (102);
at least one second electrode (120) arranged in a second layer (122) on the first layer (116) such that the first layer (116) is closer to the flexible substrate (102) than the second layer (122);
wherein the at least one first electrode comprises a plurality of first electrodes (114a-d), wherein each of the first electrodes (114a-d) defines a separate area in the first layer (116), and/or wherein the at least one second electrode comprises a plurality of second electrodes, wherein each of the second electrodes defines a separate area in the second layer;
an intermediate structure (130) arranged between the first layer (116) and the second layer (122), wherein the intermediate structure (130) is configured to change characteristics of the force sensing device (100) between the at least one first electrode (114a-d) and the at least one second electrode (120) upon a force being received by the sensor unit (112);
at least one trench (140) in the second layer (122), wherein the at least one trench (140) is configured to partially surround the at least one second electrode (120), wherein at least one bridging structure (142) is configured to connect portions of the second layer (122) on opposite sides of the at least one trench (140), wherein each of the at least one bridging structure (142) is configured to provide an anchoring position for providing a fixed relation between the first layer (116) and the second layer (122) within the sensor unit (112) in the anchoring position;
a rigid projecting structure (150) arranged on the second layer (122) projecting therefrom and connected to the at least one second electrode (120), wherein the rigid projecting structure (150) is embedded in an elastic material (152) for allowing the rigid projecting structure (150) to be tilted in relation to the first layer (116) upon receiving a force.

2. The force sensing device according to claim 1, wherein the rigid projecting structure (150) is arranged centrally on the second layer (122) in the sensor unit (112) and wherein a cross-section of the rigid projecting structure (150) is smaller than a size of the second layer (122) within an area inside the at least one trench (140).

3. The force sensing device according to any one of the preceding claims, wherein Young's modulus of a material of the rigid projecting structure (150) is at least 10 times larger than Young's modulus of the elastic material (152).

4. The force sensing device according to any one of the preceding claims, wherein the at least one trench (140) defines a quadrilateral shape of the second layer (122) being partially surrounded by the at least one trench (140).

5. The force sensing device according to claim 4, wherein the at least one trench (140) comprises four trenches and wherein the at least one bridging structure (142) comprises four bridging structures, wherein the four bridging structures are arranged at respective sides of the quadrilateral shape of the second layer (122).

6. The force sensing device according to any one of the preceding claims, wherein the at least one bridging structure (142) is formed by a monolithically integrated structure extending at least from the first layer (116) to the second layer (122).

7. The force sensing device according to any one of the preceding claims, wherein the intermediate structure (130) comprises a force sensitive material which is configured to change electric characteristics based on a force being received on a surface of the force sensitive material.

8. The force sensing device according to any one of claims 1-6, wherein the intermediate structure (130) comprises spacer structures (134) for defining a cavity between the at least one first electrode (114a-d) and the at least one second electrode (120), wherein the cavity is filled by a gas.

9. The force sensing device according to any one of the preceding claims, wherein the at least one first electrode comprises the plurality of first electrodes (114a-d) and wherein the plurality of first electrodes (114a-d) are symmetrically arranged around a central point on the first layer (116) in the sensor unit (112).

10. The force sensing device according to claim 9, wherein the plurality of first electrodes (114a-d) comprises four electrodes, wherein the four electrodes are symmetrically arranged in relation to each of two orthogonal symmetry axes in the first layer (116).

11. The force sensing device according to any one of the preceding claims, wherein the at least one sensor unit (112) comprises a plurality of sensor units arranged in an array.

12. The force sensing device according to claim 11, wherein a pitch of sensor units (112) in the array is smaller than 1 mm, such as smaller than 500 µm, such as smaller than 200 µm.

13. The force sensing device according to claim 11 or 12, further comprising at least one electric connection layer (106) comprising read-out circuitry connected to the sensor units (112), wherein the at least one electric connection layer (106) is arranged between the substrate (102) and the sensor units (112).

14. The force sensing device according to any one of claims 11-13, further comprising a protective coating layer (104) arranged between the substrate (102) and the sensor units (112) and configured to provide water and moisture protection of the sensor units (112).

15. A method for manufacturing a force sensing device, said method comprising:
forming (204) a sensor unit on a flexible substrate, wherein forming of the sensor unit comprises:
forming (206) at least one first electrode in a first layer on a first surface of the flexible substrate;
forming (208) an intermediate structure above the first layer;
forming (210) at least one second electrode in a second layer on the intermediate structure, wherein the at least one first electrode comprises a plurality of first electrodes, wherein each of the first electrodes defines a separate area in the first layer, and/or wherein the at least one second electrode comprises a plurality of second electrodes, wherein each of the second electrodes defines a separate area in the second layer; and wherein the intermediate structure is configured to change characteristics of the force sensing device between the at least one first electrode and the at least one second electrode upon receiving a force;
forming (212) at least one trench in the second layer, wherein the at least one trench is configured to partially surround the at least one second electrode, wherein at least one bridging structure is configured to connect portions of the second layer on opposite sides of the at least one trench, wherein each of the at least one bridging structure is configured to provide an anchoring position for providing a fixed relation between the first layer and the second layer within the sensor unit in the anchoring position;
forming (214) a rigid projecting structure on the second layer projecting therefrom and connected to the at least one second electrode;
forming (216) an elastic material layer such that the rigid projecting structure is embedded in an elastic material for allowing the rigid projecting structure to be tilted in relation to the first layer upon receiving a force;
wherein each act of forming is performed by microfabrication.
